(19) Europäisches Patentamt
European Patent Office
Office européen des brevets

(11) EP 1 762 544 B1

(12) **EUROPÄISCHE PATENTSCHRIFT**

(45) Veröffentlichungstag und Bekanntmachung des Hinweises auf die Patenterteilung:
**11.08.2010 Patentblatt 2010/32**

(51) Int Cl.:
***C01B 33/193*** *(2006.01)* ***C09C 1/30*** *(2006.01)*

(21) Anmeldenummer: **06115747.5**

(22) Anmeldetag: **20.06.2006**

# (54) Fällungskieselsäuren mit einer besonderen Porengrößenverteilung

Precipitated silica with a specific pore size distribution

Silice précipitée avec une distribution de tailles de pores spécifiée

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.09.2005 DE 102005043201**

(43) Veröffentlichungstag der Anmeldung:
**14.03.2007 Patentblatt 2007/11**

(73) Patentinhaber: **Evonik Degussa GmbH**
**45128 Essen (DE)**

(72) Erfinder:
- **Stenzel, Oleg, Dr.**
**50999, Köln (DE)**
- **Blume, Anke, Dr.**
**53919, Weilerswist (DE)**
- **Luginsland, Hans-Detlef, Dr.**
**Hoboken, NJ 07030 (US)**
- **Schmoll, Ralf, Dr.**
**53125, Bonn (DE)**
- **Thoma, Herbert**
**53913, Swisttal (DE)**
- **Uhrlandt, Stefan, Dr.**
**Belle Mead, NJ 08502 (US)**
- **Wehmeier, André**
**48429, Rheine (DE)**

(56) Entgegenhaltungen:
**DE-A1- 10 358 449**
**US-A1- 2002 169 248**
**US-A1- 2003 082 090**
**US-B1- 6 180 076**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 762 544 B1

## Beschreibung

Die vorliegende Erfindung betrifft Fällungskieselsäuren, die eine besonders breite Porengrößenverteilung der Poren mit einem Porendurchmesser kleiner als der des Maximums der Ableitung der Porenvolumenverteilungsfunktion aufweisen, ein Verfahren zu deren Herstellung und deren Verwendung.

Der Einsatz von Fällungskieselsäuren in Elastomerenmischungen wie Reifen ist lange bekannt. Beispiele hierfür sind der US 6013234, der EP 0647591 und der WO 03/016215 zu entnehmen.

An Kieselsäuren, die in Reifen eingesetzt werden, werden hohe Anforderungen gestellt. Sie sollen leicht und gut im Kautschuk dispergierbar sein und eine schnelle und gute Verbindung mit den jeweiligen Polymerketten des eingesetzten Kautschuks über ein Kopplungsagens wie z. B. bifunktionelle Silane eingehen können. Je effektiver dieses während des Mischprozesses gelingt, desto besser ist der Abriebwiderstand im fertigem Reifen. Andere wichtige Eigenschaften werden durch die spezifischen Oberflächen (BET oder CTAB) und die Ölaufnahmekapazität (DBP) beschrieben.

Durch die Einführung der Kieselsäure-Technologie in den so genannten "Grünen Reifen" war es möglich den Rollwiderstand drastisch zu senken, während das Abriebverhalten in etwa auf dem Niveau eines reinen Carbon Black gefüllten Reifens verblieb. Weitere Verbesserungen hinsichtlich des Abrieb- und Rollwiderstandes von Reifenmischungen werden aufgrund stetig wachsender Rohstoffpreise und angesichts eines verantwortlichen Handelns gegenüber der Umwelt immer wichtiger.

Aufgabe der vorliegenden Erfindung war es, Fällungskieselsäuren mit verbesserten anwendungstechnischen Eigenschaften, insbesondere bei der Anwendung als verstärkende Füllstoffe in Elastomerenmischungen, bereitzustellen. Ferner soll ein Verfahren zur Herstellung der erfindungsgemäßen Kieselsäuren zur Verfügung gestellt werden.

Weitere nicht explizit genannte Aufgaben ergeben sich aus dem Gesamtzusammenhang der Beschreibung, Beispiele und Ansprüche.

Überraschenderweise wurde gefunden, dass diese Aufgabe durch die in der nachfolgenden Beschreibung sowie in den Ansprüchen und den Beispielen näher definierten erfindungsgemäßen Fällungskieselsäuren gelöst wird.

Gegenstand der vorliegende Erfindung, sind Fällungskieselsäuren, gekennzeichnet durch die folgenden physikalisch-chemischen Parameter:

| | |
|---|---|
| relative Breite $\gamma$ der Porengrößenverteilung | 4,0 bis 10,0 (g nm)/ml, |
| Searszahl $V_2$ | 28 bis 40 ml/(5 g), |
| Searszahl $V_2$/CTAB-Verhältnis | 0,18 bis 0,28 ml/(5 $m^2$), |
| CTAB | 100 bis 200 $m^2$/g. |

Gegenstand der Erfindung sind weiterhin Fällungskieselsäuren, die neben den genannten Parametern, einen oder mehrere der folgenden physikalisch-chemischen Parameter aufweisen:

| | |
|---|---|
| DBP-Zahl | 200 bis 330 g/(100 g), |
| Zetapotential bei pH 5 | -12 bis -30 mV, |
| BET/CTAB-Verhältnis | > 1,3, |
| Primärteilchendurchmesser | 10 - 40 nm, |
| $Al_2O_3$-Gehalt | < 5 Gew.-%, |
| Siebrückstand (Ro-Tap, > 300 $\mu$m) | $\geq$ 80 Gew.-%, |
| Siebfraktion (Ro-Tap, < 75 $\mu$m) | $\leq$ 10 Gew.-%, |
| Kohlenstoffgehalt | 0,1 bis 20,0 Gew.-% |

und in Form von Pulvern oder in Form von etwa kugelförmigen Partikeln (Mikrogranulate) oder als Granulate vorliegen.

Ein weiterer Gegenstand der vorliegenden Erfindung ist ein Verfahren zur Herstellung der erfindungsgemäßen Fällungskieselsäuren, wie in den Ansprüchen und der nachfolgenden Beschreibung der vorliegenden Erfindung näher definiert

Ebenfalls Gegenstand der vorliegenden Erfindung ist die Verwendung der erfindungsgemäßen Kieselsäuren in Elastomerenmischungen, vulkanisierbaren Kautschukmischungen und/oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

Gegenstand der Erfindung sind zudem Elastomerenmischungen, vulkanisierbare Kautschukmischungen oder sonstige Vulkanisate sowie Reifen, die die erfindungsgemäßen Kieselsäuren enthalten.

Die erfindungsgemäßen Fällungskieselsäuren haben unter anderem den Vorteil, dass sie nach ihrer Einarbeitung in Kautschuk eine niedrige Hysterese bewirken, also bei mechanischdynamischer Belastung der Mischung einen geringen Wärmeaufbau hervorrufen und folglich z. B. einen niedrigen Rollwiderstand eines Reifens erzeugen. Ferner wird ein guter Dispersionskoeffizient und eine hohe Verstärkung erreicht, um einen geringen Abrieb des Reifens zu erzeugen.

In Summe führen die besonderen Eigenschaften der erfindungsgemäßen Fällungskieselsäuren, insbesondere

- die hohe relative Breite $\gamma$ der Porengrößenverteilung,
- die hohe Silanolgruppendichte,
- das BET/CTAB-Verhältnis

somit zu folgenden Vorteilen:

- nach Einarbeitung in Elastomeren- und Kautschukmischungen aufgrund der Porengrößenverteilung zu einem außergewöhnlich niedrigen Hystereseverlust,
- in Elastomeren- und Kautschukmischungen aufgrund der spezifischen CTAB-Oberflächenwerte zu einer hohen Verstärkung und einem verbesserten Abriebverhalten,
- einem guten Dispergierverhalten bei gleichzeitig gutem Einarbeitungsverhalten in den Kautschuk.

Das niedrige Zetapotential bei pH 5 trägt zur hohen Kautschukaktivität und Vernetzungsdichte bei.

Die Gegenstände der Erfindung werden im nachfolgenden im Detail beschrieben.

In der vorliegenden Erfindung werden die Begriffe Kieselsäure und Fällungskieselsäure synonym verwendet.

Die erfindungsgemäßen Kieselsäuren weisen eine breite Porengrößenverteilung der Poren mit einem Porendurchmesser kleiner als der des Maximums der Ableitung der Porenvolumenverteilungsfunktion auf, welche mittels Quecksilber-Porosimetrie bestimmt wird. Da Kieselsäuren in verschiedenen Darreichungsformen vorliegen können - z. B. in Form von Pulvern, kugelförmigen Partikeln oder Granulaten - muss, um einen von der Darreichungsform unabhängigen Messwert zu erhalten, zuvor eine mechanische Druckbehandlung der Kieselsäure erfolgen.

Anschließend wird das mittels der Quecksilber-Porosimetrie bestimmte Porenvolumen im Bereich von 3,5 nm bis 5 $\mu$m ausgewertet. Dazu wird auf die Daten der negativen logarithmischen Ableitung des kumulativen Porenvolumens ein Algorithmus angewendet, der zuerst den häufigsten, charakteristischen Porendurchmesser bestimmt. Dieser liegt typischer Weise im Bereich von 10 bis 100 nm. Ausgehend von diesem Wert erfolgt die weitere Auswertung gemäß der Angaben im experimentellen Teil. Man erhält damit eine relative Breite $\gamma$ der Porengrößenverteilung, welche unsymmetrische Porengrößenverteilungen berücksichtigt. Somit ist die relative Breite $\gamma$ ein charakteristisches, von der Darreichungsform unabhängiges und gut reproduzierbar zu bestimmendes Merkmal, welches nur die Poren beschreibt, die einen kleineren Durchmesser als die häufigsten Poren aufweisen (vgl. Figur 1). Dieser Porengrößenbereich entspricht vorwiegend dem Porenvolumen zwischen den zu Kieselsäureaggregaten verwachsenen Primärpartikeln und erlaubt eine Aussage über deren Aggregation. Die relative Breite $\gamma$ der Porengrößenverteilung ruft nach Einarbeitung der Fällungskieselsäuren in Kautschuk u. a. eine niedrige Hysterese hervor und gewährleistet somit einen niedrigen Rollwiderstand eines Reifens. Die relative Breite $\gamma$ der Porengrößenverteilung liegt bevorzugt im Bereich von 4,3 bis 10,0 (g nm)/ml, besonders bevorzugt von 4,3 bis 8,0 (g nm)/ml und ganz besonders bevorzugt von 4,5 bis 8,0 (g nm)/ml sowie von 4,6 bis 7,0 (g nm)/ml.

Die erfindungsgemäßen Fällungskieselsäuren weisen zudem eine hohe absolute **Searszahl $V_2$** auf. Die Searszahl $V_2$ ist ein Maß zur Beschreibung der Silanolgruppenanzahl der Kieselsäure (vgl. R. K. Iler, "The Chemistry of Silica", John Wiley & Sons (1979)). Die Searszahl $V_2$ der erfindungsgemäßen Kieselsäuren liegt im Bereich von 28 bis 40 ml/(5 g), bevorzugt von 28 bis 38 ml/(5 g) und besonders bevorzugt von 28 bis 36 ml/(5 g) und 29 bis 36 ml/(5 g).

Die Angabe der absoluten Zahl der Silanolgruppen alleine ist jedoch nicht immer geeignet, um eine Fällungskieselsäure hinreichend zu charakterisieren, da Fällungskieselsäuren mit hoher Oberfläche in der Regel eine höhere absolute Anzahl an Silanolgruppen aufweisen als Fällungskieselsäuren mit einer niedrigen Oberfläche. Somit muss die Searszahl $V_2$ ins Verhältnis mit der Oberfläche der Kieselsäure gesetzt werden. Für die erfindungsgemäße Anwendung ist die CTAB-Oberfläche wichtiger als die BET-Oberfläche anzusehen, da sie ein Maß für die von außen zugängliche und damit für Vernetzungen mit dem Kautschuksystem zur Verfügung stehende Oberfläche darstellt. Wichtig ist daher der Quotient **Searszahl $V_2$/CTAB.** So wird das durch die Silanolgruppen generierte Verstärkungspotential pro eingebrachter, äußerer Oberfläche und dadurch dem Kopplungspartner zugänglicher, spezifischer Oberfläche darstellbar. Die erfindungsgemäßen Kieselsäuren zeichnen sich durch ein im Vergleich zu Fällungskieselsäuren des Standes der Technik stark erhöhtes Verhältnis der Searszahl $V_2$ zur CTAB-Oberfläche von 0,18 bis 0,28 ml/(5 $m^2$) aus. D. h. die erfindungsgemäßen Fällungskieselsäuren weisen insbesondere im Bezug auf die äußere Oberfläche eine sehr hohe Zahl an Silanolgruppen auf. Bevorzugt liegt das Verhältnis der Searszahl $V_2$ zur CTAB-Oberfläche im Bereich von 0,18 bis 0,28 ml/(5 $m^2$) und besonders bevorzugt von 0,19 bis 0,27 ml/(5 $m^2$).

Die Silanolgruppen auf der Kieselsäureoberfläche fungieren in Kautschuk-, bzw. in Gummimischungen als

mögliche chemische Reaktionspartner mit einem Kopplungsreagens, welches die Anbindung der Kieselsäure an die Kautschukmatrix ermöglicht. Durch eine möglichst hohe Anzahl an Silanolgruppen erreicht man also eine hohe Wahrscheinlichkeit einer Kopplung zwischen Kieselsäure und dem Kopplungsreagens und dadurch eine hohe Wahrscheinlichkeit der Anbindung der Kieselsäure an die Kautschukmatrix, was letztendlich zu einem höherem Verstärkungspotential führt.

Die spezifische **CTAB**-Oberfläche ist vorwiegend für die Verstärkungseigenschaft der Kieselsäure von entscheidender Bedeutung (vgl. Janzen, Kraus, Rubber Chem. Technol. 44, 1287 (1971)). Das Verstärkungspotential steigt mit zunehmender CTAB-Oberfläche. So zeichnen sich die erfindungsgemäßen Fällungskieselsäuren durch eine CTAB-Oberfläche bevorzugt von 105 bis 195 $m^2$/g, besonders bevorzugt von 110 bis 190 $m^2$/g und ganz besonders bevorzugt von 110 bis 175 $m^2$/g aus. In einer besonderen Ausführungsform liegt die CTAB-Oberfläche im Bereich von 100 bis 139 $m^2$/g und bevorzugt im Bereich von 105 bis 135 $m^2$/g. In einer weiteren besonderen Ausführungsform weisen die erfindungsgemäßen Fällungkieselsäuren eine CTAB-Oberfläche von 141 bis 200 $m^2$/g und bevorzugt 145 bis 190 $m^2$/g und ganz besonders bevorzugt von 145 bis 175 $m^2$/g auf.

Neben der relativen Breite $\gamma$ der Porengrößenverteilung ist die Art die Poren, d. h. ob Sie für den Kautschuk zugänglich sind oder nicht, ein weiteres Kriterium der erfindungsgemäßen Kieselsäuren. Die Art der Poren wird durch den BET/CTAB-Quotienten beschrieben. Ein hoher **BET/CTAB-Quotient** zeigt eine Mikroporosität an und somit einen hohen Anteil von "innerer" -z. B. dem kleinen Stickstoffmolekül aber nicht Kautschuk zugänglicher - Oberfläche an. Das BET/CTAB-Verhältnis der erfindungsgemäßen Kieselsäuren kann größer als 1,3 sein, bevorzugt liegt es im Bereich von 1,3 bis 2,5, besonders bevorzugt im Bereich von 1,6 bis 2,4 und ganz besonders bevorzugt im Bereich von 1,7 bis 2,2. In einer speziellen Ausführungsform der vorliegenden Erfindung liegt das BET/CTAB-Verhältnis bei 1,3 bis 1,69, bevorzugt bei 1,4 bis 1,69.

Die spezifische BET-Oberfläche (vgl. S. Brunauer, P. H. Emmett, E. Teller, "Adsorption of Gases in Multimolecular Layers", J. Am. Chem. Soc. 60, 309 (1938)) beschreibt den Einfluß der Kieselsäure auf das Einarbeitungsverhalten in den Kautschuk, die Rohmischungseigenschaften, sowie die Vulkanisationskinetik. Die erfindungsgemäßen Kieselsäuren haben bevorzugt eine BET-Oberfläche, die mindestens um das 1,3fache größer ist als die CTAB-Oberfläche, besonders bevorzugt ist sie um mindestens das 1,6fache größer als die CTAB-Oberfläche und kleiner als 500 $m^2$/g, ganz besonders bevorzugt ist sie um das 1,6 bis 2,5fache größer als die CTAB-Oberfläche und kleiner als 400 $m^2$/g und insbesondere ist sie um das 1,65 bis 2,2fache größer als die CTAB-Oberfläche und kleiner als 350 $m^2$/g. In einer speziellen Ausführungsform der vorliegenden Erfindung ist die BET-Oberfläche um das 1,3 bis 1,7fache, bevorzugt um das 1,4 bis 1,69fache größer als die CTAB-Oberfläche.

Weitere Informationen über die Oberflächenaktivität sowie das Anbindungsvermögen des Kopplungsreagenzes an die Kieselsäure erhält man durch die Bestimmung des **Zetapotentials**. Dabei werden die Schallwellen detektiert, die von einer wässrigen Suspension der Kieselsäure bei einem vorgegebenen pH-Wert in einem hochfrequenten elektrischen Feld ausgehen. Diese entstehen aufgrund der Oberflächenladungen der Kieselsäure und stellen somit ein Mass der zur Verfügung stehenden geladenen Silanolgruppen für die Kopplungsreaktion dar. Die erfindungsgemäßen Kieselsäuren können vorteilhafter Weise ein Zetapotential bei pH 5 von -12 bis -30 mV aufweisen. Bevorzugt beträgt das Zeta-Potential -12 bis -25 mV, besonders bevorzugt -13 bis -21 mV und ganz besonders bevorzugt -13 bis -19 mV.

Es hat sich weiterhin herausgestellt, dass eine hohe **DBP**-Aufnahme der erfindungsgemäßen Kieselsäuren von Nutzen ist, um eine gute Dispersion zu erreichen. Dabei ist jedoch zu beachten, dass durch einen eventuellen Granulationsprozess die DBP-Zahl reduziert wird und somit eine Vergleichbarkeit von Kieselsäuren nur innerhalb einer Darreichungsform zulässig ist. Die erfindungsgemäßen Kieselsäuren können eine DBP von 200 bis 330 g/(100 g) aufweisen. Bevorzugt beträgt die DBP-Zahl 250 bis 330 g/(100 g) für Pulver und kugelförmige Partikel (Mikrogranulat) sowie 200 bis 270 g/(100 g) für Granulate.

Die erfindungsgemäßen Kieselsäuren können einen **Aluminiumoxidgehalt** von 0,001 bis 5 Gew.-%, bevorzugt 0,001 bis 0,5 Gew.-%, besonders bevorzugt 0,01 bis 0,3 Gew.-% und ganz besonders 0,01 bis 0,15 Gew.-% aufweisen.

Die erfindungsgemäßen Fällungskieselsäuren können in verschiedenen Darreichungsformen vorliegen. Z. B. in Form eines Pulvers mit einer, mittels Laserbeugung bestimmten, Partikelgröße $d_{50}$ von 1 bis 80 $\mu$m. Die pulverförmige Partikel können eine unregelmäßige aber auch eine regelmäßige äußere Form aufweisen, d. h. sie können z. B. auch im wesentlichen kugelförmig sein. Die erfindungsgemäßen Fällungskieselsäuren können auch in Form von im wesentlichen kugelförmigen Partikeln (Mikrogranulat) mit einer, mittels der Siebrückstandsbestimmung (Alpine) bestimmten, Partikelgröße $d_{50}$ von 80 $\mu$m bis 1000 $\mu$m vorliegen. Im letztgenannten Fall werden die erfindungsgemäßen Kieselsäuren vorzugsweise mittels Düsenturmtrocknung, wie in EP 0937755 beschrieben, hergestellt und zeigen eine für diese Trocknungsmethode charakteristische äußere Form (siehe Abbildungen in EP 0937755). Liegen die erfindungsgemäßen Fällungskieselsäuren in Form von Granulaten ($d_{50}$ > 1000 $\mu$m (Alpine Siebrückstand)) vor, so weisen sie nach der Granulation eine Partikelgrößenverteilung derart auf, dass mittels der Siebrückstandsbestimmung (Ro-Tap) mindestens 80 Gew.-% der Partikel größer als 300 $\mu$m und maximal 10 Gew.-% kleiner als 75 $\mu$m sind.

Die genannten Vorzugsbereiche können unabhängig voneinander eingestellt werden.

Die erfindungsgemäßen Fällungskieselsäuren können nach folgendem Verfahren hergestellt werden:

a) eine wässrige Lösung eines Alkali- oder Erdalkalisilikats und/oder einer organischen und/oder anorganischen Base werden vorgelegt, wobei die Vorlage eine Akalizahl von 20 bis 40 aufweist.

b) in diese Vorlage werden unter intensiven Rühren bei 55 bis 85 °C bis zum Viskositätsanstieg gleichzeitig Alkali- und/oder Erdalkalisilikat und ein Säuerungsmittel dosiert,

c) die Zudosierung wird für 35 bis 85 Minuten, bevorzugt unter Einhaltung der am Ende von Stufe b) erreichten Temperatur, gestoppt,

d) bei 55 bis 85 °C, bevorzugt bei gleicher Temperatur wie in Schritt b) und/oder c) wird unter Rühren gleichzeitig Alkali- und/oder Erdalkalisilikat und ein Säuerungsmittel zudosiert bis ein Feststoffgehalt von 90 bis 140 g/l erreicht ist,

e) mit einem Säuerungsmittel wird auf einen pH-Wert von 2,5 bis 5,0 angesäuert und

f) filtriert und getrocknet, wobei in mindestens einem der Schritte a) bis e) die Fällsuspension mittels eines zusätzlichen Scheraggregats geschert und die Alkalizahl während der Schritte b) und/oder d) konstant auf einem Wert zwischen 20-40 gehalten wird.

Der Viskositätsanstiegspunkt entspricht dabei dem Zeitpunkt bis zum starken Ansteigen der Viskosität der Fällsuspension im Fällverlauf, vgl. dazu EP 0643015.

Bevorzugt wird in mindestens einem der Schritte b) bis e), besonders bevorzugt in den Schritten b) bis d) und ganz besonders bevorzugt in den Schritten b) bis e) die Fällsuspension mittels eines zusätzlichen Scheraggregats einer starken Scherung unterworfen. Bevorzugt wird in den Schritten b) und d) die Schwefelsäure direkt auf den Scherkopf des zusätzlichen Scheraggregats dosiert, so dass sofort eine intensive Einmischung der Säure in die Fällsuspension und damit eine möglichst homogene und rasche Verteilung gewährleistet ist.

Die Vorlage kann ca. 20, 30, 40, 50, 60, 70, 80 oder 90 % des Endvolumens der Fällung betragen. Die zur Vorlage gegebenen basischen Verbindungen sind insbesondere ausgewählt aus der Gruppe der Alkalihydroxide, Erdalkalihydroxide, Alkalicarbonate, Alkalihydrogencarbonate und Alkalisilikate. Bevorzugt werden Wasserglas und/oder Natronlauge verwendet.

Als Säuerungsmittel wird bevorzugt Schwefelsäure verwendet. Es können aber auch andere Säuerungsmittel wie zum Beispiel HCl, $HNO_3$, $H_3PO_4$ oder $CO_2$ eingesetzt werden.

Als Alkali- oder Erdalkalisilikat werden bevorzugt Wasserglas (Natriumsilikat-Lösung mit einem Gewichtsmodul von 2,0 bis 3,5) und/oder andere Silikate wie Kalium- oder Calciumsilikat verwendet. Besonders bevorzugt wird Wasserglas mit einem Gewichtsmodul von 3,2 bis 3,5 und einer Dichte von 1,30 bis 1,45 kg/l verwendet.

Die in der Vorlage eingestellte Alkalizahl (Schritt a) sowie die Alkalizahl, während der Schritte b) und/oder d) liegt, bevorzugt zwischen 20 und 35, besonders bevorzugt zwischen 25 und 35.

Die Zugabe des Alkali- und/oder Erdalkalisilikats und des Säuerungsmittels während Schritt b) und/oder d) erfolgt bevorzugt derart, dass die Alkalizahl der Reaktionslösung während des jeweiligen Fällschrittes konstant gehalten wird. Unter "konstant" ist zu verstehen, dass die Alkalizahl während des jeweiligen Fällschritts um max. 2 % vom Sollwert abweichen darf.

Die in den Schritten b) und d) zugeführten Komponenten können jeweils gleiche oder unterschiedliche Konzentrationen und/oder Zuflussgeschwindigkeiten aufweisen. In einer Verfahrensvariante ist die Konzentration der eingesetzten Komponenten in beiden Schritten gleich, jedoch ist die Zuflussgeschwindigkeit der Komponenten in Schritt d) größer als in Schritt b). Besonders bevorzugt beträgt die Zuflussgeschwindigkeit der Komponenten in Schritt d) 125 - 140 % der Zuflussgeschwindigkeit in Schritt b).

Ferner kann optional eine zusätzliche Zugabe von organischen oder anorganischen Salzen während der Schritte a) bis e) erfolgen. Dies kann in Lösung oder als Feststoff, jeweils kontinuierlich über die Zugabezeit des Alkali- und/oder Erdalkalisilikats und des Säuerungsmittels oder als Batchzugabe durchgeführt werden. Es ist auch möglich, die Salze in einer oder beiden Komponenten zu lösen und dann gleichzeitig mit diesen zuzugeben.

Bevorzugt wird der Schritt e) zweistufig ausgeführt. Die Zuflussgeschwindigkeit des Säuerungsmittels beträgt im ersten Teilschritt bevorzugt 90 bis 110 % und im zweiten Teilschritt bevorzugt 40 bis 60 % der Zuflussgeschwindigkeit von Schritt d).

Als anorganische Salze werden bevorzugt Alkali- oder Erdalkalisalze verwendet. Insbesondere können alle Kombinationen der folgenden Ionen eingesetzt werden:

$Li^+$, $Na^+$, $K^+$, $Rb^+$, $Be^{2+}$, $Mg^{2+}$, $Ca^{2+}$, $Sr^{2+}$, $Ba^{2+}$, $H^+$, $F^-$, $Cl^-$, $Br^-$, $I^-$, $SO_3^{2-}$, $SO_4^{2-}$, $PO_3^{3-}$, $PO_4^{3-}$, $NO_3^-$, $NO_2^-$, $CO_3^{2-}$, $OH^-$, $TiO_3^{2-}$, $ZrO_3^{2-}$, $ZrO_4^{4-}$, $AlO_2^-$, $Al_2O_4^{2-}$, $BO_4^{3-}$.

Als organische Salze sind die Salze der Ameisen-, Essig- und Propionsäure geeignet. Als Kation seien die genannten Alkali- oder Erdalkaliionen genannt. Die Konzentration dieser Salze in der Zugabelösung kann 0,01 bis 5 mol/l betragen. Bevorzugt wird als anorganisches Salz $Na_2SO_4$ verwendet.

Die Filtration, Verflüssigung (z. B. gemäß DE 2447613) und Lang- oder Kurzzeittrocknung der erfindungsgemäßen Kieselsäuren sind dem Fachmann geläufig und können z. B. in den in dieser Beschreibung genannten Dokumenten nachgelesen werden. Die Filtration und das Waschen der Kieselsäure erfolgt bevorzugt in der Art und Weise, dass die Leitfähigkeit des Endprodukts < 2000 μS/cm und besonders < 1300 μS/cm beträgt.

Bevorzugt wird die erfindungsgemäße Kieselsäure in einem Stromtrockner, Sprühtrockner, Etagentrockner, Bandtrockner, Drehrohrtrockner, Flash-Trockner, Spin-Flash-Trockner oder Düsenturmtrockner getrocknet. Diese Trocknungsvarianten schließen den Betrieb mit einem Atomizer, einer Ein- oder Zweistoffdüse oder einem integrierten Fließbett ein. Die Sprühtrocknung kann z. B. gemäß US 4094771 durchgeführt werden. Eine Düsenturmtrocknung kann beispielsweise wie in EP 0937755 beschrieben durchgeführt werden. Die sprühgetrockneten Partikel können mittlere Durchmesser von über 15 μm, bevorzugt 15 bis 80 μm, gemessen mittels Laserbeugung, aufweisen. Die düsentumgetrockneten Partikel weisen bevorzugt mittlere Partikelgrößen, gemessen mittels Siebanalyse (Alpine) von über 80 μm, insbesondere über 90 μm, bevorzugt über 200 μm auf.

Die Granulation kann beispielsweise mit einer Walzenpresse des Typs WP 50N/75 der Fa. Alexanderwerk AG, Remscheid durchgeführt werden. Bevorzugt wird dabei das pulverförmige Produkt ohne weitere Zugabe von Bindemitteln oder Flüssigkeiten über ein horizontales Einspeisesystem mit Einfachschnecke durch ein Vakuumsystem entlüftet und gleichmäßig zwischen die beidseitig gelagerten vertikal angeordneten Walzen eingebracht. Das Pulver wird dabei zu einer Schülpe verpresst und mittels eines Brechers in die gewünschte maximale Granulatgröße gebracht.

Optional können die erfindungsgemäßen Kieselsäuren mit linearen, cyclischen oder verzweigten Silanen, Silazanen, Siloxanverbindungen und/oder siliziumorganischen Verbindungen modifiziert werden. Die Substituenten können beispielsweise aus Aliphaten, Olefinen, Aromaten, Arylaromaten, welche wiederum folgende Substituenten aufweisen können: -SCN, -SH, -Cl, $-NH_2$, $-OC(O)CHCH_2$, $-OC(O)C(CH_3)CH_2$, -S, $-S_2$, $-S_3$, $-S_4$, Hydroxy-, Amino-, Alkoxy-, Silanol-, Cyanid-, Thiocyanid-, Halogen-, Sulfonsäure-, Sulfonsäureester-, Benzoesäure-, Benzoesäureester-, Carbonsäure-, Carbonsäureester-, Acrylat-, Methacrylat- und/oder Organösilanresten bestehen.

Bevorzugt werden bifunktionelle Silane verwendet, die einerseits eine Kopplung zu dem silanolgruppenhaltigen Füllstoff und andererseits eine Kopplung zum Polymer ermöglichen. Beispiele für diese Organosiliziumverbindungen sind:

> Bis(3-triethoxysilylpropyl)tetrasulfan, Bis(3-triethoxysilylpropyl)disulfan, Vinyltrimethoxysilan, Vinyltriethoxysilan, 3-Mercaptopropyltrimethoxysilan, 3-Mercaptopropyltriethoxysilan, 3-Aminopropyltrimethoxysilan, 3-Aminopropyltriethoxysilan. Weitere Organosiliziumverbindungen sind in WO 99/09036, DE 10163945 und DE 10223658 beschrieben. In einer bevorzugten Ausführungsform der Erfindung kann als Silan das Bis(3-triethoxysilylpropyl) tetrasulfan oder das Bis(3-triethoxysilylpropyl)disulfan eingesetzt werden.

Die Modifizierung der optional granulierten, ungranulierten, vermahlenen und/oder unvermahlenen Fällungskieselsäuren mit einer oder mehreren der genannten Verbindungen kann in Mischungen von 0,5 bis 50 Teilen, bezogen auf 100 Teile Fällungskieselsäure, insbesondere 1 bis 15 Teile und ganz besonders 1 bis 10 Teile, bezogen auf 100 Teile Fällungskieselsäure erfolgen, wobei die Reaktion zwischen Fällungskieselsäure und den genannten Verbindungen während der Mischungsherstellung (in situ) oder außerhalb durch Aufsprühen und anschließendes Tempern der Mischung, durch Mischen des Modifizierungsagens und der Kieselsäuresuspension mit anschließender Trocknung und Temperung (zum Beispiel gemäß DE 3437473 und DE 19609619) oder gemäß des Verfahrens beschrieben in DE 19609619 oder DE 4004781 durchgeführt werden kann.

Der Kohlenstoffgehalt der modifizierten Kieselsäure beträgt 0,1 bis 20 Gew.-%, bevorzugt 0,1 bis 10 Gew.-% und besonders bevorzugt 0,5 bis 5 Gew.-%.

Ein weiterer Gegenstand der vorliegenden Erfindung ist die Verwendung von Kieselsäuren in Elastomerenmischungen, vulkanisierbaren Kautschukmischungen und/oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

Die erfindungsgemäße Fällungskieselsäure kann in Elastomerenmischungen, Reifen oder vulkanisierbaren Kautschukmischungen als Verstärkerfüllstoff in Mengen von 5 bis 200 Teilen, bezogen auf 100 Teile Kautschuk als Pulver, kugelförmiges Produkt oder Granulat sowohl mit als auch ohne organischer Nachbehandlung eingemischt werden.

Kautschuk- und Elastomerenmischungen sind im Sinne der vorliegenden Erfindung als äquivalent zu betrachten.

Neben Mischungen, die ausschließlich die erfindungsgemäßen Kieselsäuren, mit und ohne der genannten organischen Nachbehandlung, als Füllstoffe enthalten, können die Elastomeren- oder Kautschukmischungen zusätzlich mit einem oder mehreren mehr oder weniger verstärkenden Füllstoffen gefüllt sein.
Als weitere Füllstoffe können folgende Materialien eingesetzt werden:

- Ruße: Die hierbei zu verwendenden Ruße sind nach dem Flammruß-, Furnace- oder Gasruß-Verfahren hergestellt und besitzen BET-Oberflächen von 20 bis 200 $m^2/g$, wie z. B. SAF-, ISAF-, HSAF-, HAF-, FEF- oder GPF-Ruße.

Die Ruße können gegebenenfalls auch Heteroatome wie zum Beispiel Silizium enthalten.

- hochdisperse pyrogene Kieselsäuren, hergestellt zum Beispiel durch Flammenhydrolyse von Siliziumhalogeniden. Die Kieselsäuren können gegebenenfalls auch als Mischoxide mit anderen Metalloxiden, wie Al-, Mg-, Ca-, Ba-, Zn- und Titanoxiden vorliegen.
- weitere kommerzielle Kieselsäuren
- Synthetische Silicate, wie Aluminiumsilicat, Erdalkalisilicate wie Magnesiumsilicat oder Calciumsilicat, mit BET-Oberflächen von 20 bis 400 $m^2/g$ und Primärteilchendurchmessern von 10 bis 400 nm
- Synthetische oder natürliche Aluminiumoxide und -hydroxide
- Natürliche Silicate, wie Kaolin und andere natürlich vorkommende Siliziumdioxidverbindungen
- Glasfaser und Glasfaserprodukte (Matten, Stränge) oder Mikroglaskugeln
- Stärke und modifizierte Stärketypen
- Naturfüllstoffe, wie zum Beispiel Clays und Kieselkreide.

Das Verschnittverhältnis richtet sich auch hier nach dem zu erzielenden Eigenschaftsbild der fertigen Gummimischung. Ein Verhältnis von 5 bis 95 % zwischen den erfindungsgemäßen Kieselsäuren und den anderen oben genannten Füllstoffen (auch als Gemisch) ist denkbar und wird in diesem Rahmen auch realisiert.

In einer besonders bevorzugten Ausführungsform können 10 bis 150 Gew.-Teile Kieselsäuren, ganz oder teilweise bestehend aus der erfindungsgemäßen Fällungskieselsäure, gegebenenfalls zusammen mit 0 bis 100 Gew.-Teilen Ruß, sowie 1 bis 10 Gew.-Teile einer Organosiliziumverbindung, jeweils bezogen auf 100 Gew.-Teile Kautschuk, zur Herstellung der Mischungen eingesetzt werden.

Neben den erfindungsgemäßen Fällungskieselsäuren, den Organosilanen und anderen Füllstoffen bilden die Elastomere einen weiteren wichtigen Bestandteil der Kautschukmischung. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Polybutadien (BR), Polyisopren (IR), Styrol/Butadien-Copolymerisate mit Styrolgehalten von 1 bis 60, vorzugsweise 2 bis 50 Gew.-% (SBR) insbesonders hergestellt mittels des Lösungspolymerisationsverfahrens, Butylkautschuke, Isobutylen/Isopren-Copolymerisate (IIR), Butadien/Acrylnitril-Copolymere mit Acrylnitrilgehalten von 5 bis 60, vorzugsweise 10 bis 50 Gew.-% (NBR), teilhydrierter oder vollständig hydrierter NBR-Kautschuk (HNBR), Ethylen/Propylen/Dien-Copolymerisate (EPDM), sowie Mischungen dieser Kautschuke.
Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, EthylenVinylacetat-Copolymere, Ethylen-Propylen-Copolymere, gegebenenfalls auch chemische Derivate des Naturkautschuks sowie modifizierte Naturkautschuke.
Bevorzugte Synthesekautschuke sind beispielsweise bei W. Hofmann, "Kautschuktechnologie", Genter Verlag, Stuttgart 1980, beschrieben.
Für die Herstellung der erfindungsgemäßen Reifen sind insbesondere anionisch polymerisierte S-SBR-Kautschuke (Lösungs-SBR) mit einer Glasübergangstemperatur oberhalb von -50 °C sowie deren Mischungen mit Dienkautschuken von Interesse.

Die Einarbeitung dieser Kieselsäure und die Herstellung der diese Kieselsäure enthaltenden Mischungen erfolgt in der in der Gummiindustrie üblichen Art und Weise auf einem Innenmischer oder Walzwerk bei bevorzugt 80 bis 200 °C. Die Darreichungs- bzw. Einsatzform der Kieselsäuren kann sowohl als Pulver, kugelförmiges Produkt oder Granulat sein.

Die erfindungsgemäßen Kautschukvulkanisate können weitere Kautschukhilfsstoffe in den üblichen Dosierungen enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol und /oder Hexantriol. Diese Verbindungen sind in der Kautschukindustrie bekannt.

Die Kautschukhilfsmittel können in bekannten Mengen, die sich unter anderem nach dem Verwendungszweck richten, eingesetzt werden. Übliche Mengen sind zum Beispiel Mengen von 0,1 bis 50 Gew.-%, bezogen auf Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Hauptbeschleuniger sind Mercaptobenzthiazole, Sulfenamide, Thiurame, Dithiocarbamate in Mengen von 0,5 bis 3 Gew.-%. Beispiele für Cobeschleuniger sind Guanidine, Thioharnstoffe und Thiocarbonate in Mengen von 0,5 bis 5 Gew.-%. Schwefel kann üblicherweise in Mengen von 0,1 bis 10 Gew.-%, bevorzugt 1 bis 3 Gew.-%, bezogen auf Kautschuk, eingesetzt werden.

Die erfindungsgemäßen Kieselsäuren können in Kautschuken eingesetzt werden, die mit Beschleunigern und/oder Schwefel, aber auch peroxidisch vernetzbar sind.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke

mit dem Füllstoff, gegebenenfalls Kautschukhilfsmitteln und der Organosiliziumverbindung kann in bekannten Mischaggregaten, wie Walzen, Innenmischern und Mischextrudern, durchgeführt werden.
Die erfindungsgemäßen Kautschukmischungen eignen sich zur Herstellung von Formkörpern, zum Beispiel für die Herstellung von Luftreifen, Reifenlaufflächen für Sommer-, Winter- und Ganzjahresreifen, PKW-Reifen, Reifen für Nutzfahrzeuge, Motorradreifen, Reifenunterbauteilen, Kabelmänteln, Schläuchen, Treibriemen, Förderbändern, Walzenbelägen, Schuhsohlen, Dichtungsringen und Dämpfungselementen.

Gegenüber einer gleichen Kautschukmischung mit einer Fällungskieselsäure nach dem Stand der Technik zeigen Kautschukmischungen mit den erfindungsgemäßen Kieselsäuren Vorteile im Hystereseverhalten, eine schnelle Vulkanisationszeit und ein sehr gutes Verstärkungsverhalten. Gegenüber einer im gleichen Oberflächenbereich (CTAB) liegenden Kieselsäure nach dem Stand der Technik besitzen die erfindungsgemäßen Kieselsäuren ein verbessertes Abriebverhalten.

Die erfindungsgemäßen Kautschukmischungen sind insbesondere für die Herstellung von PKW- und Motorrad-Reifenlaufflächen aber auch Reifen für Nutzfahrzeuge mit erniedrigtem Rollwiderstand bei gutem Abriebswiderstand und guter Wintertauglichkeit geeignet.

Ferner eignen sich die erfindungsgemäßen Kautschukmischungen ohne Zusatz von Organosiliziumverbindungen im Blend mit einem typischen Laufflächenruß auch zur Verbesserung des Cut & Chip-Verhaltens von Bau-, Landmaschinen- und Grubenreifen (Definition und weitere Ausführungen siehe "New insights into the tear mechanism" und Referenzen hierin, präsentiert auf der Tire Technology 2003 in Hamburg von Dr. W. Niedermeier).
Die Reaktionsbedingungen und die physikalisch/chemischen Daten der erfindungsgemäßen Fällungskieselsäuren werden mit den folgenden Methoden bestimmt:

## Bestimmung des Feststoffgehalts von Filterkuchen

Nach dieser Methode wird der Feststoffgehalt von Filterkuchen durch Entfernen der flüchtigen Anteile bei 105 °C bestimmt.
Dazu werden in eine trockene, tarierte Porzellanschale (Durchmesser 20 cm) 100,00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 ± 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.
Man bestimmt den Feststoffgehalt (FG) in % gemäß
FG=A/E*100%,
mit A = Auswaage in g und E = Einwaage in g.

## Bestimmung des Feststoffgehalts von Fällsuspensionen

Der Feststoffgehalt der Fällsuspension wird gravimetrisch nach Filtration der Probe bestimmt. 100,0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. Schleicher & Schuell) in einer Porzellannutsche abgenutscht, aber nicht trockengesaugt, um Rißbildung des Filterkuchens zu verhindern. Anschließend wäscht man den Filterkuchen mit 100,0 ml destillierten Wasser. Der ausgewaschene Filterkuchen wird in eine tarierte Porzellanschale überführt und bei 105 ± 2 °C in einem Trockenschrank bis zur Gewichtskonstanz getrocknet. Nach Abkühlen auf Raumtemperatur wird das Gewicht der getrockneten Kieselsäure ($m_{Probe}$) ermittelt.
Der Feststoffgehalt bestimmt sich gemäß:
Feststoffgehalt in g/l = ($m_{Probe}$ in g) / ($V_{Suspension}$ in l).

## Bestimmung des Feststoffgehalts von Kieselsäurespeise

Die Kieselsäurespeise wird im IR-Trockner bis zur Gewichtskonstanz getrocknet. Der Trocknungsverlust besteht überwiegend aus Wasserfeuchtigkeit.
In eine tarierte Aluminiumschale werden 2,0 g Kieselsäurespeise eingefüllt und der Deckel der IR-Trockeneinheit (Fa. Mettler, Typ LP 16) geschlossen. Nach Drücken der Starttaste beginnt die Trocknung der Suspension bei 105 °C, die automatisch beendet wird, wenn die Gewichtsabnahme pro Zeiteinheit den Wert von 2 mg/(120 s) unterschreitet.
Die Gewichtsabnahme in % wird vom Gerät bei Anwahl des 0-100 %-Modus direkt angezeigt. Der Feststoffgehalt ergibt sich gemäß
Feststoffgehalt in % = 100 % - Gewichtsabnahme in %.

**Bestimmung der Alkalizahl**

Als Alkalizahl-Bestimmung (AZ-Zahl), versteht man den Verbrauch an Salzsäure in ml (bei 50 ml Probevolumen, 50 ml destillierten Wasser und einer verwendeten Salzsäure der Konzentration 0,5 mol/l) bei einer direkten potentiometrischen Titration von alkalischen Lösungen, bzw. Suspensionen bis zu einem pH-Wert von 8,30. Man erfasst hiermit den freien Alkaligehalt der Lösung bzw. Suspension.
Das pH-Gerät (Fa. Knick, Typ: 766 pH-Meter Calimatic mit Temperaturfühler) und die pH-Elektrode (Einstabmesskette der Fa. Schott, Typ N7680) werden mit Hilfe zweier Pufferlösungen (pH = 7,00 und pH = 10,00) bei Raumtemperatur kalibriert. Die Einstabmesskette wird in die auf 40 °C temperierte Meßlösung bzw. -suspension bestehend aus 50,0 ml Fällsuspension und 50,0 ml entionisiertem Wasser getaucht. Anschließend gibt man tropfenweise Salzsäure-Lösung der Konzentration 0,5 mol/l hinzu, bis sich ein konstanter pH-Wert von 8,30 einstellt. Auf Grund des sich erst langsam einstellenden Gleichgewichts zwischen der Kieselsäure und dem freien Alkaligehalt bedarf es einer Wartezeit von 15 min bis zu einem endgültigen Ablesen des Säureverbrauchs. Bei den gewählten Stoffmengen und Konzentrationen entspricht der abgelesene Salzsäureverbrauch in ml direkt der Alkalizahl, welche dimensionslos angegeben wird.

**Bestimmung des pH-Wertes**

Die Bestimmung des pH-Wertes der Kieselsäure erfolgt als 5%ige wässrige Suspension bei Raumtemperatur in Anlehnung DIN EN ISO 787-9. Gegenüber den Vorgaben dieser Norm wurden die Einwaagen verändert (5,00 g Kieselsäure auf 100 ml entionisiertes Wasser).

**Bestimmung der elektrischen Leitfähigkeit**

Die Bestimmung der elektrischen Leitfähigkeit von Kieselsäuren wird als 4%ige wässrige Suspension bei Raumtemperatur in Anlehnung an DIN EN ISO 787-14 durchgeführt. Gegenüber den Vorgaben dieser Norm wurden die Einwaagen verändert (4,00 g Kieselsäure auf 100 ml entionisiertes Wasser).

**Bestimmung der Feuchte**

Die Feuchte von Kieselsäuren wird gemäß ISO 787-2 nach 2-stündiger Trocknung in einem Umlufttrockenschrank bei 105 °C bestimmt. Dieser Trocknungsverlust besteht überwiegend aus Wasserfeuchtigkeit.

**Bestimmung der BET-Oberfläche**

Die spezifische Stickstoff-Oberfläche (im folgenden BET-Oberfläche genannt) der pulverförmigen, kugelförmigen oder granulären Kieselsäure wird gemäß ISO 5794-1/Annex D mit einem AREA-meter (Fa. Ströhlein, JUWE) bestimmt.

**Bestimmung der CTAB-Oberfläche**

Die Methode beruht auf der Adsorption von CTAB (N-Hexadecyl-N,N,N-trimethylammoniumbromid) an der "äußeren" Oberfläche der Kieselsäure in Anlehnung an die ASTM 3765, bzw. NFT 45-007 (Kapitel 5.12.1.3).
Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23 - 25 °C um das Auskristallisieren von CTAB zu verhindern. Der Rücktitration liegt die folgende Reaktionsgleichung zu Grunde:

$$\underset{\text{NDSS}}{(C_{20}H_{37}O_4)SO_3Na} + \underset{\text{CTAB}}{BrN(CH_3)_3(C_{16}H_{33})} \Rightarrow (C_{20}H_{37}O_4)SO_3N(CH_3)_3(C_{16}H_{33}) + NaBr$$

Geräte

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550
Titrierbecher 100 ml aus Polypropylen

Titrierglasgefäß, 150 ml mit Deckel
Druckfiltrationsgerät, 100 ml Inhalt
Membranfilter aus Cellulosenitrat, Porengröße 0,1 μm, 47 mm ∅, z. B. Whatman (Best. Nr. 7181-004)

Reagenzien

Die Lösungen von CTAB ($C_{CTAB}$ = 0,015 mol/l in entionisiertem Wasser) und NDSS (Konzentration = 0,00423 mol/l in entionisiertem Wasser) werden gebrauchsfertig bezogen (Fa. Bernd Kraft GmbH, 47167 Duisburg: Bestell-Nr. 6056.4700 CTAB-Lösung der Konzentration 0,015 mol/l; Bestell-Nr. 6057.4700 NDSS-Lösung 0,00423 mol/l), bei 25 °C aufbewahrt und innerhalb von einem Monat aufgebraucht.

Durchführung

**1. Blindtitration**

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %).
Es werden genau 5.00 ml CTAB-Lösung in einen Titrierbecher pipettiert und man fügt 50,0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_A$ an NDSS-Lösung in ml. Jede Titration ist als Dreifachbestimmung auszuführen.

**2. Adsorption**

10,0 g der pulverförmigen, kugelförmigen oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. Krups, Model KM 75, Artikel Nr. 2030-70) 30 Sekunden lang zerkleinert. Genau 500,0 mg der zerkleinerten Probe (Einwaage E) werden in ein 150 ml Titriergefäß mit Magnetrührstäbchen überführt und es werden genau 100,0 ml CTAB-Lösung ($T_1$) zudosiert. Das Titriergefäß wird mit einem Deckel verschlossen und mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0,1 mol/l) auf einen Wert von 9 ± 0,05 eingestellt.
Es erfolgt eine 4-minütige Beschallung der Suspension in dem Titriergefäß in einem Ultraschallbad (Fa. Bandelin, Sonorex RK 106 S, 35 kHz, 100 W Effektiv bzw. 200 W Spitzenleistung) bei 25 °C. Anschließend erfolgt eine umgehende Druckfiltration durch einen Membranfilter bei einem Stickstoffdruck von 1,2 bar. Der Vorlauf von 5 ml wird verworfen.

**3. Titration**

5,00 ml des übrigen Filtrats werden in einen 100 ml Titrierbecher pipettiert und mit entionisiertem Wasser auf 50,00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_B$ an NDSS-Lösung in ml. Jede Titration ist als Dreifachbestimmung auszuführen.

Berechnung

$$CTAB(nicht\ feuchtekorrigiert) = \frac{V_A - V_B}{V_A} * \frac{C_{CTAB} * M_{CTAB} * T_1 * P}{E}$$

$V_A$ = Verbrauch an NDSS-Lösung in ml bei der Titration der Blindprobe
$V_B$ = Verbrauch an NDSS-Lösung in ml bei Verwendung des Filtrats
$C_{CTAB}$ = Konzentration der CTAB-Lösung in mol/l
$M_{CTAB}$ = Molmasse von CTAB = 364,46 g/mol
$T_1$ = Zugegebene Menge an CTAB-Lösung in l

P = Platzbedarf von CTAB = 578,435 $m^2/g$
E = Einwaage an Kieselsäure

Die CTAB-Oberfläche wird auf die wasserfreie Kieselsäure bezogen, weshalb die folgende Korrektur durchgeführt wird.

$$CTAB = \frac{CTAB(nicht\ feuchtekorrigiert)\ in\ m^2/g\ *\ 100\,\%}{100\,\% -\ Feuchte\ in\,\%}$$

Die Feuchte der Kieselsäure wird gemäß der beschriebenen Methode "Bestimmung der Feuchte" ermittelt.

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt:
12,50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 3,15 bis 1 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0,6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.
Die DBP-Aufnahme wird in g/(100 g) angegeben und anhand der folgenden Formel berechnet:

$$DBP = \frac{V * D * 100}{E} * \frac{g}{100\,g} + K$$

mit DBP = DBP-Aufnahme in g/(100 g)
$V$ = Verbrauch an DBP in ml
$D$ = Dichte von DBP in g/ml (1,047 g/ml bei 20 °C)
$E$ = Einwaage an Kieselsäure in g
$K$ = Korrekturwert gemäß Feuchtekorrekturtabelle in g/(100 g)

Die DBP-Aufnahme ist für die wasserfreie, getrocknete Kieselsäure definiert. Bei Verwendung von feuchten Fällungskieselsäuren ist der Korrekturwert *K* für die Berechnung der DBP-Aufnahme zu berücksichtigen. Dieser Wert kann anhand der folgenden Korrekturtabelle ermittelt werden, z. B. würde ein Wassergehalt der Kieselsäure von 5,8 % einen Zuschlag von 33 g/(100 g) für die DBP-Aufnahme bedeuten. Die Feuchte der Kieselsäure wird gemäß der Methode "Bestimmung der Feuchte bzw. des Trocknungsverlusts" ermittelt.
Feuchtekorrekturtabelle für Dibutylphthalataufnahme (wasserfrei)

| | ,% Feuchte | | | | |
|---|---|---|---|---|---|
| % Feuchte | ,0 | ,2 | ,4 | ,6 | ,8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |

(fortgesetzt)

| % Feuchte | ,% Feuchte ,0 | ,2 | ,4 | ,6 | ,8 |
|---|---|---|---|---|---|
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der Sears-Zahl**

Durch die Titration von Kieselsäure mit Kaliumhydroxid-Lösung im Bereich von pH 6 bis pH 9 läßt sich die modifizierte Searszahl (im folgenden Searszahl $V_2$ genannt) als Maß für die Zahl an freien Silanolgruppen bestimmen. Der Bestimmungsmethode liegen die folgenden chemischen Reaktionen zu Grunde, wobei ≡SiOH eine Silanolgruppe der Kieselsäure symbolisieren soll:

$$\equiv SiOH + NaCl \Rightarrow \equiv SiONa + HCl$$

$$HCl + KOH \Rightarrow KCl + H_2O.$$

**Durchführung**

10,00 g einer pulverförmigen, kugelförmigen oder granulären Kieselsäure mit 5 ± 1 % Feuchte werden 60 Sekunden mit einer IKA-Universalmühle M 20 (550 W; 20 000 U/min) gleichmäßig zerkleinert. Gegebenenfalls muß der Feuchtegehalt der Ausgangssubstanz durch Trocknen bei 105 °C im Trockenschrank oder gleichmäßiges Befeuchten eingestellt und die Zerkleinerung wiederholt werden. 2,50 g der so behandelten Kieselsäure werden bei Raumtemperatur in ein 250 ml Titriergefäß eingewogen und mit 60,0 ml Methanol p. A. versetzt. Nach vollständiger Benetzung der Probe werden 40,0 ml entionisiertes Wasser zugegeben und man dispergiert mittels eines Ultra Turrax T 25 Rührers (Rührwelle KV-18G, 18 mm Durchmesser) 30 Sekunden lang bei einer Drehzahl von 18 000 U/min. Mit 100 ml entionisiertem Wasser werden die am Gefäßrand und Rührer anhaftenden Probepartikel in die Suspension gespült und in einem thermostatisiertem Wasserbad auf 25 °C temperiert.
Das pH-Messgerät (Fa. Knick, Typ: 766 pH-Meter Calimatic mit Temperaturfühler) und die pH-Elektrode (Einstabmesskette der Fa. Schott, Typ N7680) werden unter Verwendung von Pufferlösungen (pH 7,00 und 9,00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0,1 mol/l) bzw. Salzsäurelösung (0,1 mol/l) der pH-Wert auf 6,00 eingestellt. Es wird eine dynamische Titrationsart mit den folgenden Randbedingungen gewählt: Inkrementelles Titrationsvolumen $V_{min}$ = 0,05 ml bis $V_{max}$ = 1,0 ml; Wartezeit zwischen den Volumenzugaben $t_{min}$ = 2,0 s bis $t_{max}$ = 20,0 s. Der Verbrauch an KOH- bzw. HCl-Lösung in ml bis pH 6,00 entspricht $V_1$'. Danach werden 20,0 ml Natriumchlorid-Lösung (250,00 g NaCl p. A. mit entionisiertem Wasser auf 1 l aufgefüllt) zudosiert. Mit 0,1 mol/l KOH wird dann die Titration bis zum pH-Wert 9,00 durchgeführt. Der Verbrauch an KOH-Lösung in ml bis pH 9,00 entspricht $V_2$'.
Anschliessend werden die Volumina $V_1$', bzw. $V_2$' zunächst auf die theoretische Einwaage von 1 g normiert und mit 5 erweitert, woraus sich $V_1$ und die Searszahl $V_2$ in den Einheiten ml/(5 g) ergeben.

**Bestimmung der relativen Breite γ der Porengrößenverteilung**

Nach dieser Methode wird die relative Breite γ der Porengrößenverteilung von Kieselsäure mittels der Quecksilberporosimetrie bestimmt. Die Methode basiert auf der Hg-Intrusion gemäß DIN 66133 (mit einer Oberflächenspannung 480 mN/m und einem Kontaktwinkel von 140°), wobei ein Autopore IV 9500-Gerät der Firma Micromeritics verwendet wird.
Die Kieselsäure wird vor der Messung einer Druckbehandlung unterzogen. Genutzt wird hierzu eine Manual Hydraulic

Press (Bestell-Nr. 15011 der Fa. Specac Ltd., River House, 97 Cray Avenue, Orpington, Kent BR5 4HE, U.K.). Dabei werden in eine "Pellet Die" mit 13 mm Innendurchmesser der Fa. Specac Ltd. 250 mg Kieselsäure eingewogen und laut Anzeige mit 1 t belastet. Diese Last wird 5 s gehalten und gegebenenfalls nachgeregelt. Anschließend wird die Probe entspannt und für 4 h bei 105 ± 2 °C in einem Umlufttrockenschrank getrocknet.
Die Einwaage der Kieselsäure in den Penetrometer vom Typ 10 erfolgt auf 0,001 g genau und wird für eine gute Reproduzierbarkeit der Messung so gewählt, dass das "stem volume used", also das prozentual verbrauchte Hg-Volumen zum Füllen des Penetrometers 20 % bis 40 % beträgt. Anschliessend wird das Penetrometer langsam auf 50 μm Hg evakuiert und für 5 min bei diesem Druck belassen.
Die Bedienung des Autopore-Geräts erfolgt gemäß der Bedienungsanleitung mit der Software Version IV 1.05. Jede Messung wird um eine Leermessung des Penetrometers korrigiert. Der Messbereich beträgt 0,0025 - 420 MPa, wobei mindestens 136 Gleichgewichtsmesspunkte (gerätespezifisches Kriterium von 10 s) verwendet werden (im Bereich 0,0025 - 0,25 MPa: 30 Punkte, im Bereich 0,25 - 15 MPa: 53 Punkte, 15 - 150 MPa: 40 Punkte, im Bereich 150 - 420 MPa: 13 Punkte). Ggf. fügt die Software weitere Messpunkte ein, wenn dass inkrementelle Intrusionsvolumen > 0,04 ml/g beträgt. Die Glättung der Intrusionskurve erfolgt mittels der "smooth differentials"-Funktion der Gerätesoftware.
Um die relative Breite γ der Porengrößenverteilung zu bestimmen, wird auf die Daten der negativen logarithmischen Ableitung der Intrusionskurve im Porendurchmesserbereich von 3,5 nm bis 5 μm der folgende Algorithmus angewendet: Der Algorithmus benutzt ein von großen Porendurchmessern kommendes, bewegliches Fenster aus drei aufeinanderfolgenden Meßpunkten der negativen logarithmischen Ableitung der Intrusionskurve und legt eine Parabel durch die Punkte. Das Maximum der Parabel wird als das gesuchte Maximum A bei einem Porendurchmesser a definiert. Es wird kontrolliert, ob der Punkt a im gesuchten Porendurchmesserbereich liegt und das globale Maximum der negativen logarithmischen Ableitung der Intrusionskurve darstellt. Wenn dies nicht der Fall ist, wird das Fenster um einen Punkt verschoben, erneut eine Parabel durchgelegt, und der Vorgang solange wiederholt bis beide Kriterien erfüllt sind. Dann wird B als 0,300 A definiert.
b stelle den Porendurchmesser der Kurve dar, der kleiner als a ist, an dem zum ersten Mal der Wert B erreicht wird. Schließlich wird die relative Breite γ der Porengrößenverteilung definiert als γ = (a-b)/(A-B) = (a-b)/(0,7 A), wobei a und b die Einheiten Nanometer und die Einheit (g nm)/ml aufweisen.
Ein typischer Kurvenverlauf der negativen logarithmischen Ableitung des kumulierten Porenvolumens *V* gemäß Gleichung 1 hinsichtlich des Porendurchmessers *x* mit i Meßpunkten und den Merkmalen *a*, *b*, *A* sowie *B* ist in Figur 1 dargestellt.

Gleichung 1:

$$\frac{dV}{d\log x} = \frac{dV}{\frac{1}{x}dx} = x\frac{dV}{dx}$$

$$x\frac{dV}{dx} \approx x\frac{\Delta V}{\Delta x}\Big|_{\Delta x = x_i - x_{i-1}} = x_i\frac{V_i - V_{i-1}}{x_i - x_{i-1}} \approx x_i\frac{V_{i+1} - V_{i-1}}{x_{i+1} - x_{i-1}}$$

<u>**Bestimmung des Zetapotentials**</u>

Nach dieser Methode wird das Zetapotential von Kieselsäure bei pH 5 mittels der Elektrokinetischen Schallamplitude (ESA) bestimmt.
Dazu wird zuerst die Probe bei 105°C ± 2°C 5 h getrocknet und danach 100 ml einer Suspension mit 1 Vol.-% Kieselsäure in destillierten Wasser hergestellt. Die dazu benötigte Partikeldichte wird mittels He-Pyknometrie (DIN 66137-2) bestimmt. Die Dispergierung erfolgt für 5 Minuten mittels eines Ultraschallstabs (Bandelin Sonopuls HD2200 mit Ultraschallwandler UW2200, Power 100 %, Cycle 8 (80 % Pulse, also 0,8 s Power und 0,2 s Pause) mit Boosterhorn SH 213 G Titanteller TT 13, Ø 13 mm, Eintauchtiefe 1 cm) in einem 150 ml Becherglas (Höhe 9,5 cm, Aussendurchmesser 5 cm), das für den Zeitraum der Beschallung im Eisbad gekühlt wird.
Die auf Raumtemperatur gebrachte Suspension wird mit einem Magnetrührer gerührt und über eine Schlauchpumpe durch den PPL-80 Sensor des ESA-8000 Geräts der Firma Matec gepumpt. Es erfolgt die automatische potentiometrische Titration bei Raumtemperatur mit 5 molarer $HNO_3$ und einer "delay time" von 30 s bis zu einem pH-Wert von 5. Sollte der Anfangs pH-Wert der Suspension < 5 sein, so erfolgt die Titration mit 5 molarer NaOH Lösung bis zu einem pH-Wert von 5. Die Auswertung erfolgt mittels der Gerätesoftware Version pcava 5.94.

Es wird das Zetapotenzial bei pH 5 berechnet:

$$\zeta = \frac{ESA \cdot \eta}{\phi \cdot \Delta\rho \cdot c \cdot |G(\alpha)| \cdot \varepsilon}$$

| | |
|---|---|
| $\zeta$ | *Zetapotential [$10^{-3}$ V]* |
| *ESA* | *Elektrokinetische Schallamplitude bei pH 5 [Pa m/V]* |
| $\phi$ | *Volumenfraktion (0,01)* |
| $\Delta\rho$ | *Dichtedifferenz zwischen den Partikeln (s.o.) und der Flüssigkeit (0,997 kg/l)* |
| *c* | *Schatigeschwindigkeit in der Suspension (1490 m/s)* |
| $\eta$ | *Viskosität der Flüssigkeit (0, 89 cP minus 2 % pro °C Abweichung von 25 °C)* |
| $\varepsilon$ | *Dielektrizitätskonstante der Suspension (78,36 As/Vm)* |
| $\|G(\alpha)\|$ | *Trägheitskorrektur (Funktion des Partikelradius und der Dichte, s. Handbuch)* |

Zur Bestimmung ist der Wert des mittleren Partikelradius notwendig, welcher anhand der obigen, mit Ultraschall behandelten Suspension mittels dynamischer Lichtstreuung bestimmt wird. Dazu wird das Horiba LB-500 Gerät verwendet (Radius = 0,5 x Mean der volumengewichteten Partikelverteilung, Calculation Level = 50, Küvettendicke 1 cm, Optisches Modell: Flüssigkeitsbrechungsindex Real = 1,333; Material Brechungsindex Real = 1,45; Imaginär = 0,01).

**Bestimmung der Partikelgröße mittels Laserbeugung**

Die Anwendung der Laserbeugung zur Bestimmung von Teilchengrößen von Pulvern basiert auf der Erscheinung, dass Teilchen monochromatisches Licht mit unterschiedlichem Intensitätsmuster in alle Richtungen streuen. Diese Streuung ist abhängig von der Teilchengröße. Je kleiner die Teilchen, desto größer sind die Streuungswinkel.
Die Probenvorbereitung und Messung (Spülen des Moduls, ect.) erfolgt im Fall hydrophiler Fällungskieselsäure mit VE Wasser, im Fall nicht ausreichend mit Wasser benetzbarer Fällungskieselsäure mit reinem Ethanol.
Vor Beginn der Messung lässt man das Laserbeugungsgerät LS 230 (Fa. Coulter) und das Flüssigkeitsmodul (Small Volume Module Plus, 120 ml, Fa. Coulter) 2 h warmlaufen, spült das Modul dreimal mit VE Wasser, kalibriert es und spült im Falle hydrophober Fällungskieselsäuren dreimal mit Ethanol.
In der Steuerleiste der Gerätesoftware wählt man über dem Menüpunkt "Messung" das Dateifenster "Opt. Modell berechnen" aus und legt die Brechungsindizes in einer .rfd-Datei fest: Flüssigkeitsbrechungsindex B. I. Real = 1,332 (1,359 für Ethanol); Material Brechungsindex Real = 1,46; Imaginär = 0,1; Formfaktor 1. Zusätzlich wählt man in diesem Dateifenster die folgenden Punkte aus: Offsetmessung, Justieren, Hintergrundmessung, Messkonz. einstellen, Probeninfo eingeben, Messinfo eingeben, Messzeit 60 s, Anzahl Messungen 1, ohne PIDS Daten, Größenverteilung. Die Pumpengeschwindigkeit wird am Gerät auf 30 % eingestellt.
Es erfolgt die Zugabe der homogenen Suspension von 1 g Kieselsäure in 40 ml VE Wasser mit einer 2 ml Einwegpipette in das Flüssigkeitsmodul des Gerätes in der Art, dass eine konstante Konzentration mit einer Lichtabsorption von 8 bis 12 % erreicht wird und das Gerät "OK" meldet. Die Messung erfolgt bei Raumtemperatur. Aus der Rohdatenkurve berechnet die Software auf Basis der Volumenverteilung unter Berücksichtigung der Mie-Theorie und der optischen Modellparameter (.rfd-Datei) die Teilchengrößenverteilung und den d50-Wert (Medianwert).

**Bestimmung des Siebrückstands (Alpine)**

Bei dieser Siebrückstandsbestimmung handelt es sich um eine Luftstrahlsiebung in Anlehnung an DIN ISO 8130-1 mittels eines Luftstrahlsiebgeräts S 200 der Fa. Alpine. Zur Bestimmung des $d_{50}$-Werte von Mikrogranulaten und Granulaten werden dazu auch Siebe mit einer Maschenweite > 300 $\mu$m eingesetzt. Um den $d_{50}$-Wert zu ermitteln, müssen die Siebe so gewählt werden, dass sie eine Partikelgrößenverteilung liefern, aus der der $d_{50}$-Wert gemäß Figur 2 bestimmt werden kann. Die grafische Darstellung und Auswertung erfolgt analog zu ISO 2591-1, Kapitel 8.2.
Unter dem $d_{50}$-Wert ist der Partikeldurchmesser in der kumulativen Partikelgrößenverteilung zu verstehen, bei der 50% der Partikel einen geringeren oder gleichen Partikeldurchmesser aufweisen als/wie die Partikel mit dem Partikeldurchmesser des $d_{50}$-Wertes.

**Bestimmung des Siebrückstands (Ro-Tap)**

Mit dieser Methode wird der Anteil gröberer Partikel (> 300 $\mu$m) und der Anteil feinerer Partikel (< 75 $\mu$m) von Granulaten mittels Siebung bestimmt.

Es werden eine Siebpfanne, ein Analysensieb mit Metallsiebgewebe (DIN ISO 565 T.2, Nennmaschenweite 75 µm), ein Analysensieb mit Metallsiebgewebe (DIN ISO 565 T.2, Nennmaschenweite 150 µm), sowie ein Analysensieb mit Metallsiebgewebe (DIN ISO 565 T.2, Nennmaschenweite 300 µm) mit jeweils 200 mm Siebdurchmesser verwendet. Der Siebturm wird in der genannten Reihenfolge in eine Analysensiebmaschine Ro-Tap B 8260 mit Zeitschaltuhr der Firma Tyler eingebracht und eine homogene Probenmenge von 100,00 g der Kieselsäuregranulate wird auf das oberste Sieb überführt. Der Siebdeckel und der Klopfer werden aufgesetzt und die Siebung erfolgt mit einer Kreis- und Klopfbewegung für 5 min.
Die Siebrückstände (Ro-Tap) werden bestimmt gemäß

$$\text{Siefraktion (Ro-Tap, < 75 µm) in \%} = (A_S/E) * 100\,\%,$$

sowie

$$\text{Siebrückstand (Ro-Tap, > 300 µm) in \%} = (A_{300}/E) * 100\,\%,$$

mit
$A_S$ = Auswaage des Rückstands in der Siebpfanne in g,
$A_{300}$ = Auswaage des Rückstands auf dem Sieb mit 300 µm Nennwaschenweite in g
und E = Einwaage in g.

**Bestimmung des Kohlenstoffgehalts**

Die Bestimmung des Kohlenstoffgehaltes an Kieselsäuren erfolgt mittels eines Elementanalysators LECO CS 244. Dabei wird Kieselsäure in einen Keramiktiegel eingewogen, mit Verbrennungszuschlägen versehen und in einem Induktionsofen unter einem Sauerstoffstrom erhitzt. Der vorhandene Kohlenstoff wird hierbei zu $CO_2$ oxidiert. Diese Gasmenge wird über Infrarotdetektoren quantifiziert.
Vor der eigentlichen Messung wird eine Kalibrierung des Geräts mit geeignetem Referenzmaterial (z. B. Wolframcarbid mit 6,17 Gew.-% Kohlenstoff) durchgeführt. Für Kieselsäuren werden 150 bis 200 mg auf 1 mg genau in einen Keramiktiegel eingewogen. Das Probenmaterial wird mit 1 g Lecocel II (Pulver einer Wolfram-Zinn(10%ige)-Legierung) und 0,7 g Eisenspäne überdeckt. Anschließend wird der Tiegel mit einem Deckel verschlossen. Der Induktionsofen wird auf maximale Leistung eingestellt und 10 s mit Sauerstoff gespült. Nachdem dann der Tiegel in den Induktionsofen eingesetzt wurde, wird die automatische Messung und Auswertung gestartet. Pro Probe werden drei Bestimmungen durchgeführt. Das Ergebnis bezieht sich auf die Originalsubstanz und wird in Gew.-% angegeben.

**Bestimmung des Aluminiumoxidgehalts**

Die Bestimmung des Aluminiumoxidgehalts erfolgt in Anlehnung an DIN EN ISO 3262-18 mittels Flammenatomabsorptionsspektroskopie bei einer Wellenlänge von 309,3 nm.
Ca. 20 g einer Kieselsäure werden auf 0,01 g genau in einen Platintiegel eingewogen und mit destillierten Wasser befeuchtet. 1 ml konz. Flusssäure (40 %, p.a.) wird zugefügt und die Mischung wird in einem Sandbad bis zum Abrauchen erhitzt. Nach und nach wird Salpetersäure tropfenweise zugegeben, bis die Kieselsäure komplett aufgelöst ist. Nach Eindampfen bis zur Trockene wird der Rückstand in 3 ml konz. Salzsäure gelöst. Die abgekühlte Lösung wird quantitativ in einen 100 ml-Meßbecher überführt und dort auf 100 ml mit destilliertem Wasser aufgefüllt.
Die so hergestellte Lösung wird gemäß der Bedienungsanleitung in einem Flammenatomabsorptionsspektrometer untersucht (Wellenlänge: 309,3 nm, Slit S: 0,7 nm, Gasstrom: Acetylen/$N_2O$).
Die Bestimmung des Aluminiumoxidgehaltes erfolgt an der Originalprobe, der Gehalt wird jedoch auf die für 2 h bei 1000 °C geglühte Probe bezogen:

$$\%\,Al_2O_{3\,\text{bezogen auf geglühte Substanz}} = \frac{\%\,Al_2O_{3\,\text{bezogen auf Originalsubstanz}} \times 100}{100\,\% - \text{Glühverlust in }\%}.$$

**Bestimmung des Dispersionskoeffizienten**

Der Dispersionskoeffizient läßt sich mittels einer topographischen Methode, beschrieben unter: "Entwicklung eines Verfahrens zur Charakterisierung der Füllstoffdispersion in Gummimischungen mittels einer Oberflächentopographie" A. Wehmeier; Diplomarbeit 1998 an der Fachhochschule Münster, Abteilung Steinfurt im Fachbereich Chemieingenieurwesen und "Filler dispersion Analysis by Topography Measurements" Degussa AG, Applied Technology Advanced Fillers, Technical Report TR 820, bestimmen.
Alternativ kann der Dispersionskoeffizient auch mittels dem DIAS Verfahren (lichtoptisch) am Deutschen Institut für Kautschuktechnologie in Hannover bestimmt werden (siehe H. Geisler, DIK aktuell, 1. Ausgabe (1997) und Medalia, Rubber Age, April 1965).
Der beste erreichbare Dispersionsgrad liegt bei 100 %, der theoretisch schlechteste würde demnach bei 0°% liegen. Kieselsäuren mit einem Dispersionskoeffizienten von größer oder gleich 90 %, sind als hoch dispersibel (HD) einzustufen.
Erläuterung zur Bestimmung des Dispersionskoeffizienten mittels Oberflächentopographie:

$$\textit{Dispersionskoeffizient} = 100\,\% - \frac{(\textit{Summe derPeakgrundflächen}) \bullet 10000\,\% \bullet \textit{Medaliafaktor}}{\textit{Füllstoffvolumen} \bullet (\textit{untersuchteGesamtfläche})}\,\%$$

$$\textit{Medaliafaktor} = \frac{\dfrac{\textit{Füllstoffvolumen}}{100\,\%} + 0{,}78}{2}$$

Dispersionskoeffizient in %
Summe der Peakgrundflächen (Maß für die Rauheit) in $mm^2$
Füllstoffvolumen in %
untersuchte Gesamtfläche in $mm^2$

Die folgenden Beispiele sollen die Erfindung näher erläutern, ohne ihren Umfang zu beschränken.

**Beispiel 1**

In einem Doppelmantel-Reaktor (Höhe 1,60 m, Innendurchmesser 1,60 m) aus rostfreiem Edelstahl mit Klöpperboden, MIG-Schrägblattrührsystem und Ekato Fluid-Scherturbine werden 1202 l Wasser sowie 172,4 kg Wasserglas (Dichte 1,348 kg/l, 27,0 Gew.-% $SiO_2$, 8,05 Gew.-% $Na_2O$) vorgelegt. Anschließend werden unter intensiven Rühren und Scheren bei einer Temperatur von 79 °C für 35 min 5,85 kg/min des oben genannten Wasserglases und ca. 0,65 kg/min Schwefelsäure (Dichte 1,83 kg/l, 96 Gew.-% $H_2SO_4$) gleichzeitig zudosiert. Die Schwefelsäuredosierung erfolgt auf die Scherturbine und wird so geregelt, dass in dem Reaktionsmedium über die gesamte Dauer der Zudosierung eine AZ-Zahl von 30,0 +/- 0,3 herrscht. Beide Rohstoffzugaben werden gestoppt und die erhaltene Suspension wird 60 min bei 79 °C intensiv gerührt und geschert. Schliesslich werden unter weiterhin intensiven Rühren und Scheren bei 79 °C für 50 min 8,00 kg/min des oben genannten Wasserglases und ca. 0,90 kg/min der oben genannten Schwefelsäure gleichzeitig zudosiert. Die Schwefelsäuredosierung wird erneut so geregelt, dass in dem Reaktionsmedium eine AZ-Zahl von 30,0 +/- 0,3 herrscht. Die Wasserglaszugabe wird gestoppt und die Schwefelsäure mit 0,90 kg/min weiter zugeführt, bis ein pH von 7,0 (gemessen bei Raumtemperatur) erreicht ist. Im direkten Anschluss wird mit einer Schwefelsäurezugabe von 0,45 kg/min der End-pH-Wert der Suspension von 3,2 (gemessen bei Raumtemperatur) eingestellt. Die erhaltene Suspension wird mit einer Membranfilterpresse filtriert und der Filterkuchen mit Wasser gewaschen. Der Filterkuchen mit 21 Gew.-% Feststoffgehalt wird anschliessend mit Wasser und der oben genannten Schwefelsäure in einem Dissolver verflüssigt. Die Kieselsäurespeise mit 18 Gew.-% Feststoffgehalt und einem pH-Wert von 4,2 wird anschliessend unter Ammoniakdosierung so sprühgetrocknet, dass sich im Endprodukt ein pH-Wert, gemessen als 5%ige Suspension, von 5,8 einstellt. Die Walzengranulation erfolgt mit einer Walzenpresse des Typs WP 50N/75 der Fa. Alexanderwerk AG. Dabei wird das pulverförmige Produkt ohne weitere Zugabe von Bindemitteln oder Flüssigkeiten über ein horizontales Einspeisesystem mit Einfachschnecke (Drehzahl 86 U/min) durch ein Vakuumsystem entlüftet (Unterdruck 0,3 bar) und gleichmäßig zwischen die beidseitig gelagerten, vertikal angeordneten Walzen eingebracht. Bei einer Drehzahl von 11 U/min und einem Druck von 14 bar wird das Pulver zu einer Schülpe verpresst und mittels eines Brechers (Maschenweite 8 mm) zerkleinert. Der Feinanteil wird mit einem Vibrationssieb abgesiebt (Maschenweite 1,2 mm) und in die Pulveraufgabe zurückgeführt.

Die physikalisch-chemischen Daten einer repräsentativen Probe des Pulvers (Beispiel 1a) und des Granulats (Beispiel 1b) sind in Tabelle 1 aufgelistet.

**Beispiel 2**

In einem Doppelmantel-Reaktor (Höhe 1,60 m, Innendurchmesser 1,60 m) aus rostfreiem Edelstahl mit Klöpperboden, MIG-Schrägblattrührsystem und Ekato Fluid-Scherturbine werden 1202 l Wasser sowie 172,4 kg Wasserglas (Dichte 1,348 kg/l, 27,0 Gew.-% $SiO_2$, 8,05 Gew.-% $Na_2O$) vorgelegt. Anschließend werden unter intensiven Rühren und Scheren bei einer Temperatur von 70 °C für 42 min 5,85 kg/min des oben genannten Wasserglases und ca. 0,65 kg/min Schwefelsäure (Dichte 1,83 kg/l, 96 Gew.-% $H_2SO_4$) gleichzeitig zudosiert. Die Schwefelsäuredosierung erfolgt auf die Scherturbine und wird so geregelt, dass in dem Reaktionsmedium eine AZ-Zahl von 30,0 +/- 0,3 herrscht. Beide Rohstoffzugaben werden gestoppt und die erhaltene Suspension wird 60 min bei 70 °C intensiv gerührt und geschert. Schliesslich werden unter weiterhin intensiven Rühren und Scheren bei 70 °C für 45 min 8,00 kg/min des oben genannten Wasserglases und ca. 0,90 kg/min der oben genannten Schwefelsäure gleichzeitig zudosiert. Die Schwefelsäuredosierung wird erneut so geregelt, dass in dem Reaktionsmedium eine AZ-Zahl von 30,0 +/- 0,3 herrscht. Die Wasserglaszugabe wird gestoppt und die Schwefelsäure mit 0,90 kg/min weiterzugeführt, bis ein pH von 7,0 (gemessen bei Raumtemperatur) erreicht ist. Im direkten Anschluss wird mit einer Schwefelsäurezugabe von 0,45 kg/min der End-pH-Wert der Suspension von 3,2 (gemessen bei Raumtemperatur) eingestellt.
Die erhaltene Suspension wird mit einer Membranfilterpresse filtriert und der Filterkuchen mit Wasser gewaschen. Der Filterkuchen mit 23 Gew.-% Feststoffgehalt wird anschliessend mit einem Spin-Flash-Trockner getrocknet. Die Granulation erfolgt analog zu Beispiel 1.
Die physikalisch-chemischen Daten einer repräsentativen Probe des Pulvers (Beispiel 2a) und des Granulats (Beispiel 2b) sind in Tabelle 1 aufgelistet.

**Beispiel 3**

In einem Doppelmantel-Reaktor (Höhe 1,60 m, Innendurchmesser 1,60 m) aus rostfreiem Edelstahl mit Klöpperboden, MIG-Schrägblattrührsystem und Ekato Fluid-Scherturbine werden 1202 l Wasser sowie 172,4 kg Wasserglas (Dichte 1,348 kg/l, 27,0 Gew.-% $SiO_2$, 8,05 Gew.-% $Na_2O$) vorgelegt. Anschließend werden unter intensiven Rühren und Scheren bei einer Temperatur von 65 °C für 42 min 5,85 kg/min des oben genannten Wasserglases und ca. 0,65 kg/min Schwefelsäure (Dichte 1,83 kg/l, 96 Gew.-% $H_2SO_4$) gleichzeitig zudosiert. Die Schwefelsäuredosierung erfolgt auf die Scherturbine und wird so geregelt, dass in dem Reaktionsmedium eine AZ-Zahl von 30,0 +/- 0,3 herrscht. Beide Rohstoffzugaben werden gestoppt und die erhaltene Suspension wird 60 min bei 65 °C intensiv gerührt und geschert. Schliesslich werden unter weiterhin intensiven Rühren und Scheren bei 65 °C für 45 min 8,00 kg/min des oben genannten Wasserglases und ca. 0,90 kg/min der oben genannten Schwefelsäure gleichzeitig zudosiert. Die Schwefelsäuredosierung wird erneut so geregelt, dass in dem Reaktionsmedium eine AZ-Zahl von 30,0 +/- 0,3 herrscht. Die Wasserglaszugabe wird gestoppt und die Schwefelsäure mit 0,90 kg/min weiterzugeführt, bis ein pH von 7,0 (gemessen bei Raumtemperatur) erreicht ist. Im direkten Anschluss wird mit einer Schwefelsäurezugabe von 0,45 kg/min der End-pH-Wert der Suspension von 3,3 (gemessen bei Raumtemperatur) eingestellt.
Die erhaltene Suspension wird mit einer Membranfilterpresse filtriert und der Filterkuchen mit Wasser gewaschen. Der Filterkuchen mit 21 Gew.-% Feststoffgehalt wird anschliessend mit Wasser und der oben genannten Schwefelsäure in einem Dissolver verflüssigt. Die Kieselsäurespeise mit 18,5 Gew.-% Feststoffgehalt und einem pH-Wert von 4,0 wird anschliessend unter Ammoniakdosierung so sprühgetrocknet, dass sich im Endprodukt ein pH-Wert, gemessen als 5%ige Suspension, von 5,8 einstellt und analog zu Beispiel 1 bei einem Druck von 13 bar granuliert.
Die physikalisch-chemischen Daten einer repräsentativen Probe des Pulvers (Beispiel 3a) und des Granulats (Beispiel 3b) sind in Tabelle 1 aufgelistet.

Tabelle 1:

| | Einheit | **Beispiel 1a** | **Beispiel 1b** | **Beispiel 2a** | **Beispiel 2b** | **Beispiel 3a** | **Beispiel 3b** |
|---|---|---|---|---|---|---|---|
| Darreichungsform | | Pulver | Granulat | Pulver | Granulat | Pulver | Granulat |
| Feuchte | % | 5,7 | 5,7 | 6,0 | 6,4 | 6,1 | 6,6 |
| pH-Wert | - | 5,8 | 6,0 | 7,1 | 7,0 | 5,8 | 6,0 |
| Leitfähigkeit | µS/cm | 410 | 380 | 110 | 110 | 470 | 450 |
| BET-Oberfläche | $m^2/g$ | 242 | 249 | 311 | 296 | 304 | 293 |

(fortgesetzt)

| | Einheit | **Beispiel 1a** | **Beispiel 1b** | **Beispiel 2a** | **Beispiel 2b** | **Beispiel 3a** | **Beispiel 3b** |
|---|---|---|---|---|---|---|---|
| CTAB-Oberfläche | $m^2/g$ | 118 | 122 | 150 | 145 | 165 | 170 |
| DBP-Aufnahme | g/(100 g) | 287 | 238 | 288 | 259 | 297 | 249 |
| Searszahl $V_2$ | ml/(5g) | 30,2 | 29,5 | 29,0 | 29,3 | 33,3 | 32,9 |
| Searszahl $V_2$/CTAB | ml/(5 $m^2$) | 0,256 | 0,242 | 0,193 | 0,202 | 0,202 | 0,194 |
| BET/CTAB | - | 2,05 | 2,04 | 2,07 | 2,04 | 1,84 | 1,72 |
| Zetapotential | mV | -19,3 | -18,3 | -14,9 | -15,8 | -15,3 | -16,3 |
| relative Breite $\gamma$ der Porengrößenverteilung | (g nm) /ml | 6,4 | 6,5 | 4,7 | 4,7 | 5,3 | 5,3 |
| Siebrückstand (Ro-Tap, > 300 $\mu$m) | % | - | 91,2 | - | 93,3 | - | 92,2 |
| Siebfraktion (Ro-Tap, < 75 $\mu$m) | % | - | 3,0 | - | 2,8 | - | 2,4 |
| $Al_2O_3$-Gehalt | % | 0,14 | 0,15 | 0,14 | 0,14 | 0,14 | 0,13 |

**Anwendungstechnische Beispiele**

Für die Herstellung der Kautschukmischungen und Vulkanisate werden die Beispiele 1b, 2b, 3b verwendet.

Die für die Gummimischungen verwendete Rezeptur (Standard Green Tire) ist in der folgenden Tabelle 2 angegeben. Dabei bedeutet die Einheit "phr" Gewichtsanteile bezogen auf 100 Teile des eingesetzten Rohkautschuks.

Tabelle 2:

| **Standard-Green-Tire** | | | |
|---|---|---|---|
| **Substanz** | **phr** | **Artikelbezeichnung** | **Firme** |
| **1. Stufe** | **Grundnischen** | | |
| Buna VSL 5025-1 | 96 | SSBR ölverstreckt (siehe Text) | Lanxess Europe GmbH & Co.KG 51369 Levekusen, Deutschland |
| Buna CB 24 | 30 | cis1,4-BR (siehe Text) | Lanxess Europe GmbH & Co. KG, 51369 Levekuser Deutschland |
| erfindungsgemäße Kieselsäure (KS) | 80 | | |
| X 50-S | 12,8 | Si 69 (Bis(3-triethoxysilylpropylpropyl) tetrasulfan)/ Carbon Black des Typs N 330: 50 %/ 50 % | Degussa AG; Frankfut am Main; Deutschland |
| ZnO, RS RAL 844 C | 3,0 | ZnO | Amsperger Chemikalien GmbH; 50858 Köln Deutschland |
| EDENOR ST1 GS | 2,0 | Palmitinstearinsäure; Stearin "Jodzahl 1" | Caldic Deutschland GmbH & Co. KG; 40231 Düsseldof Deutschland |
| Naftolen ZD | 10,0 | aromatisches Weichmacheröl | Chemetal GmbH; 60487 Franklut a.M Deutschland |

(fortgesetzt)

| Standard-Green-Tire | | | |
|---|---|---|---|
| **Substanz** | **phr** | **Artikelbezeichnung** | **Firme** |
| **1. Stufe** | **Grundnischen** | | |
| Vulkanox 4020/LG | 1,5 | | Rhein Chemie Rheinau GmbH; 68219 Mannheim Rheinau Deutschland |
| Protektor G 3108 | 1,0 | N-(1,3-dimethybutyl)-N'-phenyl-p-phenylendiamin (6PPD) Mischung von raffinierten Kohlenwasserstoffwachsen | Paramelt BV; 706875 Paramelt BV; NL 1704 RJ Heerhugowaart Niederlande |
| **2. Stufe** | **Zwicken/remill Stuffe** | | |
| Batch Stufe 1 | | | |
| **3. Stufe** | **Fertigmischen** | | |
| Batch Stufe 2 | | | |
| Vulkacit D | 2,0 | N,N-Diphenylguanidin (DPG) | Rhein Chemie Rheinau GmbH; 68219 Mannheim Rheinau, Deutschland |
| Vulkacit CZ/EG-C | 1,5 | N-Cydohenyl-benzothoiazolsulfenamid (CBS) | Rhein Chemie Rheinau GmbH; 68219 Mannheim Rheinau, Deutschland |
| Perkacit TBZTD | 0,2 | Tetrabenzylthiuramdisulfild (TBz TD) | Flexsys N.V./S.A Woluwe Garden B--1932 St. Stevens Woluwe; Belgen |
| Mahlchwefel | 1,5 | Schwefel fein verteit Ph Eur, BP | Merck KGaA; 64271 Damstadt; Deutschland |

Bei dem Polymer VSL 5025-1 handelt es sich um ein in Lösung polymerisiertes SBR-Copolymer der Bayer AG (heutige Lanxess Europe GmbH & Co. KG) mit einem Styrolgehalt (mittels UV Spektroskopie) von ca. 25 +/- 2 Gew.-% und einem Vinylgehalt (mittels IR Spektroskopie) von ca. 50 +/- 4 Gew.-%. Das Copolymer enthält ca. 27 Gew.-% aromatisches Mineralöl (25,8 - 28,8 Gew.-%) und weist eine Mooney Viskosität (ASTM D 1646) von etwa 50 +/- 5 MU auf.

Bei dem Polymer Buna CB 24 handelt es sich um ein cis-1,4-Polybutadien (Titantyp) der Bayer AG (heutige Lanxess Europe GmbH & Co. KG) mit einem cis-1,4-Gehalt (mittels IR-Spektroskopie) von mind. 96 Gew.-% und einer Mooney Viskosität (DIN 53523) von etwa 45 MU (39 MU - 49 MU).

Tabelle 3:

| Mischvorschrift | |
|---|---|
| **1. Stufe** | Innenmischer GK 1.5N, Füllgrad 0,73, 70 U/min, Durchflußtemperatur 70 °C, Stempeldruck 5,5 bar |
| 0,0' - 0,5'<br>0,5' - 1,5'<br>1,5' - 2,5'<br>2,5' - 3,5'<br>3,5' - 5,0'<br>5,0' | Polymere<br>1/3 KS, X 50 S; bei 1,5' säubern<br>1/3 KS; bei 2,5' säubern<br>1/3 KS, restliche Bestandteile; bei 3,5' säubern<br>mischen, ggf. Drehzahlvariation erforderlich, um die Auswurftemperatur zu erreichen<br>Batch ausfahren (Batchtemperatur 145 °C- 155 °C) und auf die Walze geben:<br>3*links, 3*rechts einschneiden, umlegen,<br>5*eng, 5*weit stürzen,<br>Fell ausziehen |
| 24 h Zwischenlagerung bei Raumtemperatur zur Stufe 2 | |

(fortgesetzt)

| | |
|---|---|
| | |
| **2. Stufe** | Innenmischer GK 1.5N, Füllgrad 0,71,<br>80 U/min, Durchflußtemperatur 80 °C,<br>Stempeldruck 5,5 bar |
| 0,0' - 2,0'<br>2,0' - 5,0'<br>5,0' | Batch Stufe 1 plastizieren<br>Batchtemperatur 150 °C halten durch Drehzahlvariation<br>Batch ausfahren (Batchtemperatur 145 °C - 155 °C) und auf die Walze geben:<br>3*links, 3*rechts einschneiden, umlegen,<br>5*eng, 5*weit stürzen,<br>Fell ausziehen |
| 4 h Zwischenlagerung bei Raumtemperatur zur Stufe 3 | |
| | |
| **3. Stufe** | Innenmischer GK 1.5N, Füllgrad 0,69,<br>40 U/min, Durchflußtemperatur 50 °C,<br>Stempeldruck 5,5 bar |
| 0,0' - 2,0'<br>2,0' | Batch Stufe 2, Beschleuniger, Schwefel<br>Batch ausfahren (Batchtemperatur 90 °C - 110 °C) und auf die Walze geben:<br>3*links, 3*rechts einschneiden, umlegen,<br>5*eng, 5*weit stürzen,<br>Fell ausziehen |
| 12 h Zwischenlagerung bei Raumtemperatur bis zum Beginn der Prüfungen | |

Das allgemeine Verfahren zur Herstellung von Kautschukmischungen und deren Vulkanisate ist in dem folgendem Buch beschrieben: "Rubber Technology Handbook", W. Hofmann, Hanser Verlag 1994.
Die Vulkanisationszeit für die Prüfkörper beträgt bei 165 °C jeweils 20 min für Beispiel 1b und 3b sowie 15 min für Beispiel 2b.
Die gummitechnische Prüfung erfolgt gemäß den in Tabelle 4 angegebenen Prüfmethoden.

Tabelle 4:

| **Physikalische Testung** | **Norm / Bedingungen** |
|---|---|
| **ML 1+4,100 °C, 3. Stufe (MU)** | **DIN 53523/3, ISO 667** |
| **Vulkameterprüfung, 165 °C,**<br>**MDR, Auslenkung 0,5 °**<br>Dmax- Dmin (dNm)<br>t 80 % - t 20 % (min)<br>t 10 % und t 90 % (min) | **DIN 53529/3, ISO 6502** |
| **Zugversuch am Ring, 23 °C**<br>Spannungswert (MPa) | **DIN 53504, ISO 37** |
| **Shore-A-Härte, 23 °C (SH)** | **DIN 53 505** |
| **Ball Rebound (%)** | **DIN EN ISO 8307,**<br>Fallhöhe 500 mm,<br>Stahlkugel, d= 19 mm, 28 g |
| **DIN-Abrasion, 10 N Kraft ($mm^3$)** | **DIN 53 516** |
| **Dispersionskoeffizient (%)** | **siehe Text** |
| **Viskoelastische Eigenschaften,**<br>**0 °C und 60 °C, 50 N Vorkraft und 25 N Amplitudenkraft,** | **DIN 53 513, ISO 2856** |

(fortgesetzt)

| Physikalische Testung | Norm / Bedingungen |
|---|---|
| **Temperierzeit 5 min,**<br>**Meßwertaufnahme nach 30 s Prüfzeit**<br>Komplexer Modul E* (MPa)<br>Verlustfaktor tan δ (-) | |

In den nachfolgend aufgeführten Tabellen sind die anwendungstechnischen Daten der Beispiele 1b, 2b und 3b, die gemäß den Tabellen 2 - 4 compoundiert und getestet wurden, dargestellt.

Tabelle 5:

| | | Ultrasil VN 2 GR | Beispiel 1b |
|---|---|---|---|
| ML 1+4 | MU | 66 | 72 |
| t 10 % | min | 1,6 | 1,9 |
| t 90 % | min | 6,7 | 6,3 |
| t 80 % - t 20 % | min | 2,5 | 2,2 |
| Spannungswert 300 % | MPa | 12,0 | 12,6 |
| Shore-A-Härte | SH | 66 | 65 |
| DIN-Abrieb | $mm^3$ | 78 | 75 |
| Ball Rebound, 23 °C | % | 30,3 | 34,5 |
| Ball Rebound, 60 °C | % | 58,3 | 64,7 |
| E*, 0 °C, 10 Hz | MPa | 22,7 | 16,8 |
| E*, 60 °C, 16 Hz | MPa | 10,1 | 9,0 |
| tan δ, 60 °C, 16 Hz | - | 0,126 | 0,102 |

Tabelle 6:

| | | Ultrasil 7000 GR | Beispiel 2b |
|---|---|---|---|
| ML 1+4 | MU | 72 | 83 |
| t 10 % | min | 1,4 | 1,3 |
| t 90 % | min | 6,4 | 5,4 |
| t 80 % - t 20 % | min | 2,5 | 2,1 |
| Spannungswert 300 % | MPa | 11,0 | 12,2 |
| Shore-A-Härte | SH | 66 | 67 |
| DIN-Abrieb | $mm^3$ | 100 | 96 |
| Ball Rebound, 23 °C | % | 30,0 | 31,4 |
| Ball Rebound, 60 °C | % | 58,0 | 60,8 |
| E*, 0 °C, 10 Hz | MPa | 22,2 | 23,1 |
| E*, 60 °C, 16 Hz | MPa | 9,2 | 9,9 |
| tan δ, 60 °C, 16 Hz | - | 0,121 | 0,112 |

Tabelle 7:

| | | Ultrasil 7005 | Beispiel 3b |
|---|---|---|---|
| ML 1+4 | MU | 80 | 90 |
| t 10 % | min | 1,1 | 1,5 |
| t 90 % | min | 7,3 | 6,7 |
| t 80 % - t 20 % | min | 3,1 | 2,8 |
| Spannungswert 300 % | MPa | 11,8 | 11,7 |
| Shore-A-Härte | SH | 69 | 70 |
| DIN-Abrieb | $mm^3$ | 118 | 113 |
| Ball Rebound, 23 °C | % | 30,8 | 32,7 |
| Ball Rebound, 60 °C | % | 58,3 | 62,1 |
| E*, 0 °C, 10 Hz | MPa | 29,3 | 24,0 |
| E*, 60 °C, 16 Hz | MPa | 10,5 | 10,5 |
| tan $\delta$, 60 °C, 16 Hz | - | 0,134 | 0,121 |

In der Standard Green Tire Rezeptur wurden als Referenzen kommerziell erhältliche Kieselsäuren der Degussa AG verwendet, die im selben spezifischen CTAB-Oberflächenbereich liegen (siehe Tabelle 8) wie die jeweils zu testende erfindungsgemäße Kieselsäure. Somit ist sichergestellt, daß die gummitechnischen Ergebnisse gut vergleichbar sind.

Tabelle 8:

| | Einheit | Ultrasil VN 2 GR | Ultrasil 7000 GR | Ultrasil 7005 |
|---|---|---|---|---|
| BET-Oberfläche | $m^2/g$ | 127 | 172 | 180 |
| CTAB-Oberfläche | $m^2/g$ | 129 | 158 | 171 |
| relative Breite $\gamma$ der Porengrößenverteilung | (g nm)/ml | 3,8 | 3,4 | 3,5 |

Da die spezifische BET-Oberflächen der erfindungsgemäßen Kieselsäuren sehr hoch sind, würde man kaum verarbeitbare Viskositäten der Beispielmischungen erwarten. Es zeigt sich jedoch, daß die Fällungskieselsäuren aus den Beispielen 1b bis 3b nur eine leicht erhöhte Mooney-Viskositäten besitzen. Dies zeigt eine überraschend gute Verarbeitbarkeit der erfindungsgemäßen Fällungskieselsäuren an. Des weiteren haben alle drei Fällungskieselsäuren eine erhöhte Vernetzungsgeschwindigkeit t 80 % - t 20 % und im Fall der Kieselsäuren gemäß Beispiel 1b und 3b sind sogar die Scorch-Zeiten t 10% vorteilhafterweise verlängert.

Am deutlichsten werden die Vorteile der erfindungsgemäßen Fällungskieselsäuren anhand der dynamischen Daten. Hier erhält man starke Verbesserungen hinsichtlich des Hystereseverlusts, was an den erhöhten Ball-Rebound und den reduzierten tan $\delta$ Werten zu erkennen ist. Die E*-Werte liegen ebenfalls auf einem guten Niveau.

Das sehr gute Verstärkungsverhalten der Beispielkieselsäuren erkennt man an dem Spannungswert 300 %, welcher mindestens auf gleichem oder sogar verbessertem Niveau gegenüber dem der jeweiligen Referenz liegt.

Die Dispersionskoeffizienten in der Standard Green Tire Rezeptur liegen für alle drei untersuchten Fällungskieselsäuren (Beispiele 1b, 2b und 3b) bei über 90 % und sind daher als hoch dispersible (HD) Kieselsäuren zu klassifizieren (Tabelle 9).

Tabelle 9: Dispersionskoeffizienten nach Medalia

| Beispiel 1b | Beispiel 2b | Beispiel 3b |
|---|---|---|
| 97% | 92% | 98% |

Das beschriebene gummitechnische Verhalten ist insbesondere auf die Breite $\gamma$ der Porengrößenverteilung zurückzuführen. Es liegen Kieselsäuremorphologien vor, die wesentlich stabiler sind als die bisher bekannten und dadurch trotz guter Dispergierbarkeit auch nach der Einarbeitung in die Kautschukmatrix bestehen bleiben. Daraus resultieren Bereiche mit hoher Kieselsäuredichte und Bereiche in denen die Polymermatrix vorherrscht, wobei vor allem

letztere Bereiche zu deutlich geringeren Hystereseverlusten führen.
Vor allem durch die hohe Silanolgruppenanzahl und die hohe Silanolgruppendichte (Searszahl $V_2$/CTAB) wird über das bifunktionelle Silan mehr Polymer angebunden als gemeinhin üblich. Es entsteht ein sehr gutes Verstärkungsverhalten, was durch den hohen Spannungswert 300 % und dem niedrigen DIN-Abrieb angezeigt wird.
Durch das niedrige Zetapotential der erfindungsgemäßen Kieselsäuren und der damit verbundenen erhöhten Oberflächenaktivität kann die aufgrund der verschiedenen Polaritäten normaler Weise geringe Polymer / Kieselsäurewechselwirkung deutlich verbessert werden, wie es durch das erhöhte Verstärkungsverhalten angezeigt wird

## Patentansprüche

1. Fällungskieselsäure, **gekennzeichnet durch** die folgenden physikalisch-chemischen Parameter:

| | |
|---|---|
| relative Breite $\gamma$ der Porengrößenverteilung | 4,0 bis 10,0 (g nm)/ml, |
| Searszahl $V_2$ | 28 bis 40 ml/(5 g), |
| Searszahl $V_2$/CTAB-Verhältnis | 0,18 bis 0,28 ml/(5 $m^2$), |
| CTAB | 100 bis 200 $m^2$/g. |

2. Fällungskieselsäure nach Anspruch 1, **dadurch gekennzeichnet,** **dass** das BET/CTAB-Verhältnis größer 1,3 ist.

3. Fällungskieselsäure nach einem der Ansprüche 1 bis 2, **dadurch gekennzeichnet,** **dass** das Zetapotential bei pH 5 von -12 bis -30 mV beträgt.

4. Fällungskieselsäure nach einem der Ansprüche 1 bis 3, **dadurch gekennzeichnet,** **dass** das Öladsorptionsvermögen, ausgedrückt als DBP-Zahl, 200 bis 330 g/(100 g) beträgt.

5. Fällungskieselsäure nach einem der Ansprüche 1 bis 4, **dadurch gekennzeichnet,** **dass** der $Al_2O_3$-Gehalt zwischen 0,001 und 5 Gew.-% beträgt.

6. Granuläre Fällungskieselsäure nach einem der Ansprüche 1 bis 5, **dadurch gekennzeichnet,** **dass** der Siebrückstand (Ro-Tap) auf einem 300 $\mu$m-Sieb mindestens 80 Gew.-% beträgt.

7. Granuläre Fällungskieselsäure nach einem der Ansprüche 1 bis 6, **dadurch gekennzeichnet,** **dass** die Siebfraktion < 75 $\mu$m (Ro-Tap) maximal 10 Gew.-% beträgt.

8. Fällungskieselsäure nach den Ansprüchen 1 bis 7, **dadurch gekennzeichnet, dass** die Kieselsäure einen Kohlenstoffgehalt von 0,1 bis 20,0 Gew.-% aufweist.

9. Verfahren zur Herstellung von Fällungskieselsäuren, **dadurch gekennzeichnet, dass** nacheinander

   a) eine wässrige Lösung eines Alkali- oder Erdalkalisilikats und/oder einer organischen und/oder anorganischen Base vorgelegt wird, wobei die Vorlage eine Alkalizahl von 20 - 40 aufweist,
   b) in diese Vorlage unter intensiven Rühren bei 55 bis 85 °C bis zum Viskositätsanstieg gleichzeitig Alkali- und/ oder Erdalkalisilikat und Säuerungsmittel dosiert wird,
   c) die Zudosierung für 35 bis 85 Minuten, bevorzugt unter Einhaltung der am Ende von Stufe b) erreichten Temperatur, gestoppt wird,
   d) bei 55 bis 85 °C, bevorzugt bei gleicher Temperatur wie in Schritt b) und/oder c), unter Rühren gleichzeitig Alkali- und/oder Erdalkalisilikat und ein Säuerungsmittel zudosiert wird, bis ein Feststoffgehalt von 90 bis 140 g/l erreicht ist,
   e) mit Säuerungsmittel auf einen pH-Wert von ca. 2,5 bis 5,0 angesäuert wird und
   f) filtriert und getrocknet wird,

   wobei in mindestens einem der Schritte a) bis e) die Fällsuspension mittels:eines zusätzlichen Scheraggregats geschert und die Alkalizahl während der Schritte b) und/oder d) konstant auf einem Wert zwischen 20-40 gehalten wird.

10. Verfahren nach Anspruch 9, **dadurch gekennzeichnet, dass** in den Schritten b) und d) die Schwefelsäure direkt auf den Scherkopf des zusätzlichen Scheraggregats dosiert wird, so dass sofort eine intensive Einmischung der Säure in die Fällsuspension und damit eine möglichst homogene und rasche Verteilung erfolgt.

11. Verfahren nach einem der Ansprüche 9 oder 10, **dadurch gekennzeichnet, dass** die Zuflussgeschwindigkeit in Schritt d) größer ist als in Schritt b).

12. Verfahren nach Anspruch 11, **dadurch gekennzeichnet, dass** die Zuflussgeschwindigkeit der Komponenten in Schritt d) 125-140 % der Zuflussgeschwindigkeit in Schritt b) beträgt.

13. Verfahren nach einem der Ansprüche 9 bis 12, **dadurch gekennzeichnet,** **dass** als Base ein Alkali- und/oder Erdalkalisilikat und/oder ein Alkali- und/oder ein Erdalkalihydroxid verwendet wird.

14. Verfahren nach einem der Ansprüche 9 bis 13 **dadurch gekennzeichnet,** **dass** während der Schritte a) bis e) eine Zugabe eines organischen oder anorganischen Salzes erfolgt.

15. Verfahren nach einem der Ansprüche 9 bis 14, **dadurch gekennzeichnet,** **dass** zur Trocknung ein Stromtrockner, Sprühtrockner, Etagentrockner, Bandtrockner, Drehrohrtrockner, Flash-Trockner, Spin-Flash-Trockner oder Düsenturmtrockner eingesetzt wird.

16. Verfahren nach einem der Ansprüche 9 bis 15, **dadurch gekennzeichnet,** **dass** nach der Trocknung eine Granulation mit einer Walzenpresse durchgeführt wird.

17. Verfahren nach den Ansprüchen 9 bis 16, **dadurch gekennzeichnet,** **dass** die Fällungskieselsäure mit linearen, cyclischen und/oder verzweigten Silanen, Silazanen, Siloxanverbindungen und/oder siliziumorganischen Verbindungen modifiziert wird.

18. Verfahren nach Anspruch 17, **dadurch gekennzeichnet,** **dass** Bis(3-triethoxysilylpropyl)tetrasulfan oder Bis(3-triethoxysilylpropyl)disulfan zur Modifizierung der Fällungskieselsäure verwendet wird.

19. Verwendung von Kieselsäuren gemäß einem der Ansprüche 1 bis 8 zur Herstellung von Elastomeremischungen, vulkanisierbaren Kautschukmischungen und/oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

20. Vulkanisierbare Kautschukmischungen und Vulkanisate, enthaltend zumindest eine Fällungskieselsäure gemäß einem der Ansprüche 1 bis 8 als Füllstoff enthalten.

21. Reifen, enthaltend zumindest eine Fällungskieselsäure nach einem der Ansprüche 1 bis 8.

## Claims

1. Precipitated silica, **characterized by** the following physicochemical parameters:

| | |
|---|---|
| Relative breadth $\gamma$ of pore size distribution | 4.0 - 10.0 (g nm)/ml, |
| Sears number $V_2$ | 28 - 40 ml/(5 g), |
| Sears number $V_2$/CTAB ratio | 0.18 - 0.28 ml/(5 $m^2$), |
| CTAB | 100 - 200 $m^2$/g. |

2. Precipitated silica according to Claim 1, **characterized in that** the BET/CTAB ratio is greater than 1.3.

3. Precipitated silica according to either one of Claims 1 and 2, **characterized in that** the zeta potential at pH 5 is from -12 to -30 mV

4. Precipitated silica according to any one of Claims 1 to 3, **characterized in that** the oil adsorbency expressed as DBP number is from 200 to 330 g/(100 g).

5. Precipitated silica according to any one of Claims 1 to 4, **characterized in that** the $Al_2O_3$ content is from 0.001 to 5% by weight.

6. Granular precipitated silica according to any one of Claims 1 to 5, **characterized in that** the (Ro-Tap) sieve residue on a 300 μm sieve is at least 80% by weight.

7. Granular precipitated silica according to any one of Claims 1 to 6, **characterized in that** the < 75 μm (Ro-Tap) sieve fraction is at most 10% by weight.

8. Precipitated silica according to any of Claims 1 to 7, **characterized in that** the silica has a carbon content of from 0.1 to 20.0% by weight.

9. Process for production of precipitated silicas, **characterized in that**, in succession,

   a) an aqueous solution of an alkali metal silicate or of an alkaline earth metal silicate and/or of an organic and/or inorganic base is used as initial charge, the alkali number of the initial charge being from 20 to 40,
   b) alkali metal silicate and/or alkaline earth metal silicate and acidifier is simultaneously metered into this initial charge with intensive stirring at from 55 to 85°C until viscosity rises,
   c) the feed is stopped for from 35 to 85 minutes, preferably while maintaining the temperature reached at the end of stage b),
   d) alkali metal silicate and/or alkaline earth metal silicate and an acidifier is simultaneously fed with stirring at from 55 to 85°C, preferably at a temperature identical with that in step b) and/or c), until a solids content of from 90 to 140 g/l has been reached,
   e) an acidifier is used for acidification to a pH of from about 2.5 to 5.0 and
   f) filtration and drying is carried out, wherein at least one of the steps a) to e), the precipitation suspension is sheared by means of an additional shear assembly and the alkali number is kept constant at from 20-40 during steps b) and/or d).

10. Process according to Claim 9, **characterized in that**, in the steps b) and d), the sulfuric acid is metered directly onto the shear head of the additional shear assembly, in such a way as immediately to produce intensive incorporation of the acid by mixing into the precipitated suspension, and thus very homogeneous and rapid dispersion.

11. Process according to one of Claims 9 and 10, **characterized in that** the inflow rate in step d) is greater than in step b).

12. Process according to Claim 11, **characterized in that** the inflow rate of the components in step d) is from 125 to 140% of the inflow rate in step b).

13. Process according to any one of Claims 9 to 12, **characterized in that** an alkali metal silicate and/or alkaline earth metal silicate and/or an alkali metal hydroxide and/or an alkaline earth metal hydroxide is used as base.

14. Process according to any one of Claims 9 to 13, **characterized in that**, during steps a) to e), an organic or inorganic salt is added.

15. Process according to any one of Claims 9 to 14, **characterized in that** a pneumatic dryer, spray dryer, staged dryer, belt dryer, rotating-tube dryer, flash dryer, spin-flash dryer or spray tower dryer is used for the drying process.

16. Process according to any one of Claims 9 to 15, **characterized in that**, after the drying process, a granulation process is carried out with a roll-press.

17. Process according to any of Claims 9 to 16, **characterized in that**

the precipitated silica is modified with linear, cyclic and/or branched silanes, silazanes, siloxane compounds and/or organosilicon compounds.

**18.** Process according to Claim 17, **characterized in that** bis(3-triethoxysilylpropyl)tetrasulfane or bis(3-triethoxysilylpropyl)disulfane is used for modification of the precipitated silica.

**19.** Use of silicas according to any one of Claims 1 to 8 for production of an elastomer mixture, of a vulcanizable rubber mixture and/or of another vulcanizate, for example of a pneumatic or other tire, of a tire tread, of cable sheathing, of a hose, of a drive belt, of a conveyor belt, of a V-belt, of a roller covering, of a shoe sole, of a gasket, or of a damping element.

**20.** Vulcanizable rubber mixture or vulcanizate, comprising at least one precipitated silica according to any one of Claims 1 to 8, as filler.

**21.** Tire, comprising at least one precipitated silica according to any one of Claims 1 to 8.

**Revendications**

**1.** Silice précipitée, **caractérisée par** les paramètres physico-chimiques suivants :

| | |
|---|---|
| amplitude relative $\gamma$ de la distribution de tailles des pores | 4,0 à 10,0 (g nm)/ml, |
| indice de Sears $V_2$ | 28 à 40 ml/(5 g), |
| rapport indice de Sears $V_2$/CTAB | 0,18 à 0,28 ml/(5 $m^2$), |
| CTAB | 100 à 200 $m^2$/g. |

**2.** Silice précipitée selon la revendication 1, **caractérisée en ce que** le rapport BET/CTAB est supérieur à 1,3.

**3.** Silice précipitée selon l'une quelconque des revendications 1 à 2, **caractérisée en ce que** le potentiel zêta à pH 5 est de -12 à -30 mV.

**4.** Silice précipitée selon l'une quelconque des revendications 1 à 3, **caractérisée en ce que** la capacité d'adsorption d'huile, exprimée par l'indice DBP, est de 200 à 330 g/(100 g).

**5.** Silice précipitée selon l'une quelconque des revendications 1 à 4, **caractérisée en ce que** la teneur en $Al_2O_3$ est comprise entre 0,001 et 5 % en poids.

**6.** Silice précipitée granulaire selon l'une quelconque des revendications 1 à 5, **caractérisée en ce que** le résidu de tamisage (Ro-Tap) sur un tamis de 300 $\mu$m est d'au moins 80 % en poids.

**7.** Silice précipitée granulaire selon l'une quelconque des revendications 1 à 6, **caractérisée en ce que** la fraction de tamisage < 75 $\mu$m (Ro-Tap) est d'au plus 10 % en poids.

**8.** Silice précipitée selon les revendications 1 à 7, **caractérisée en ce que** la silice présente une teneur en carbone de 0,1 à 20,0 % en poids.

**9.** Procédé de fabrication de silices précipitées, **caractérisé en ce que**, successivement,

a) une solution aqueuse d'un silicate alcalin ou alcalino-terreux et/ou d'une base organique et/ou inorganique est préparée, la préparation présentant un indice d'alcali de 20 à 40,
b) un silicate alcalin et/ou alcalino-terreux et un agent d'acidification sont ajoutés simultanément à cette préparation sous agitation intensive de 55 à 85 °C jusqu'à ce que la viscosité augmente,
c) l'ajout est arrêté pendant 35 à 85 minutes, de préférence en maintenant la température atteinte à la fin de l'étape b),
d) à une température de 55 à 85 °C, de préférence à la même température que dans l'étape b) et/ou c), sous agitation, un silicate alcalin et/ou alcalino-terreux et un agent d'acidification sont ajoutés simultanément, jusqu'à

atteindre une teneur en solides de 90 à 140 g/l,
e) le mélange est acidifié avec un agent d'acidification à un pH d'environ 2,5 à 5,0, puis
f) filtré et séché,

la suspension de précipitation étant cisaillée avec un appareil de cisaillement supplémentaire lors d'au moins une des étapes a) à e) et l'indice d'alcali étant maintenu constant à une valeur comprise entre 20 et 40 pendant l'étape b) et/ou d).

**10.** Procédé selon la revendication 9, **caractérisé en ce que** l'acide sulfurique est ajouté directement au niveau de la tête de cisaillement de l'appareil de cisaillement supplémentaire pendant les étapes b) et d), de manière à ce qu'une incorporation intensive immédiate de l'acide dans la dispersion de précipitation, et ainsi une distribution aussi homogène et rapide que possible, ait lieu.

**11.** Procédé selon l'une quelconque des revendications 9 ou 10, **caractérisé en ce que** la vitesse d'alimentation lors de l'étape d) est supérieure à celle lors de l'étape b).

**12.** Procédé selon la revendication 11, **caractérisé en ce que** la vitesse d'alimentation des composants lors de l'étape d) est 125 à 140 % de la vitesse d'alimentation lors de l'étape b).

**13.** Procédé selon l'une quelconque des revendications 9 à 12, **caractérisé en ce qu'**un silicate alcalin et/ou alcalino-terreux et/ou un hydroxyde alcalin et/ou alcalino-terreux est utilisé en tant que base.

**14.** Procédé selon l'une quelconque des revendications 9 à 13, **caractérisé en ce qu'**un ajout d'un sel organique ou inorganique a lieu pendant les étapes a) à e).

**15.** Procédé selon l'une quelconque des revendications 9 à 14, **caractérisé en ce qu'**un séchoir à écoulement, un séchoir à pulvérisation, un séchoir à étages, un séchoir à bande, un séchoir à tube rotatif, un séchoir éclair, un séchoir éclair rotatif ou un séchoir à tour à buses est utilisé pour le séchage.

**16.** Procédé selon l'une quelconque des revendications 9 à 15, **caractérisé en ce qu'**une granulation avec une presse à cylindres est réalisée après le séchage.

**17.** Procédé selon les revendications 9 à 16, **caractérisé en ce que** la silice précipitée est modifiée avec des silanes linéaires, cycliques et/ou ramifiés, des silazanes, des composés de siloxane et/ou des composés organiques de silicium.

**18.** Procédé selon la revendication 17, **caractérisé en ce que** le bis(3-triéthoxysilylpropyl)tétrasulfane ou le bis(3-triéthoxysilylpropyl)disulfane est utilisé pour la modification de la silice précipitée.

**19.** Utilisation de silices selon l'une quelconque des revendications 1 à 8 pour la fabrication de mélanges élastomères, de mélanges caoutchouteux vulcanisables et/ou d'autres produits vulcanisés, tels que des pneumatiques, des surfaces de roulement de pneus, des gainages de câbles, des tuyaux, des courroies d'entraînement, des bandes transporteuses, des courroies trapézoïdales, des revêtements de cylindres, des pneus, des semelles de chaussures, des joints et des éléments d'amortissement.

**20.** Mélanges caoutchouteux vulcanisables et produits vulcanisés, contenant au moins une silice précipitée selon l'une quelconque des revendications 1 à 8 en tant que charge.

**21.** Pneus, contenant au moins une silice précipitée selon l'une quelconque des revendications 1 à 8.

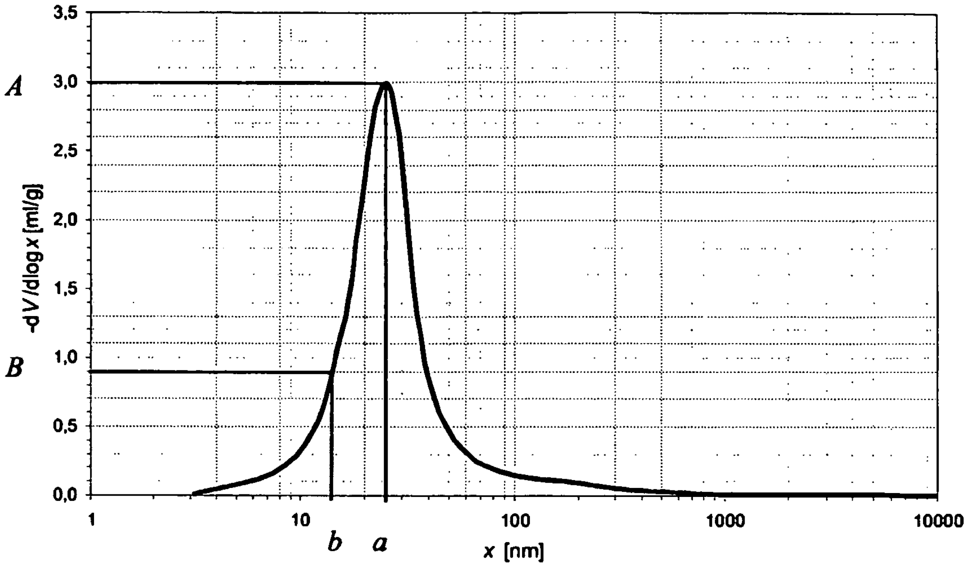


Figur 1: Typischer Kurvenverlauf der negativen logarithmischen Ableitung des kumulierten Porenvolumens *V* hinsichtlich des Porendurchmessers *x* mit den Merkmalen *a*, *b*, *A* und *B*.

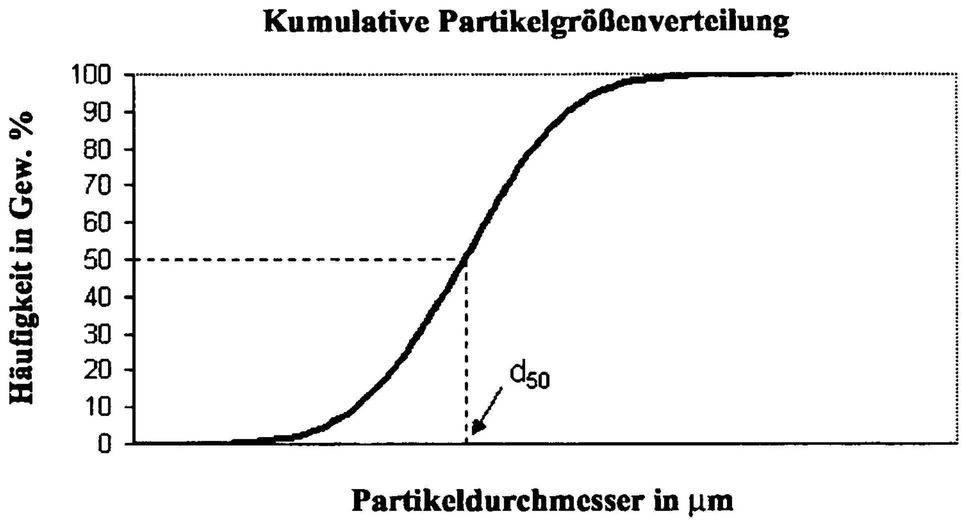
Kumulative Partikelgrößenverteilung
Häufigkeit in Gew. %
100
90
80
70
60
50
40
30
20
10
0
d50
Partikeldurchmesser in µm

Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6013234 A
- EP 0647591 A
- WO 03016215 A
- EP 0937755 A
- EP 0643015 A
- DE 2447613
- US 4094771 A
- WO 9909036 A
- DE 10163945
- DE 10223658
- DE 3437473
- DE 19609619
- DE 4004781


### In der Beschreibung aufgeführte Nicht-Patentliteratur


- **R. K. ILER.** The Chemistry of Silica. John Wiley & Sons, 1979
- **JANZEN ; KRAUS.** *Rubber Chem. Technol.,* 1971, vol. 44, 1287
- **S. BRUNAUER ; P. H. EMMETT ; E. TELLER.** Adsorption of Gases in Multimolecular Layers. *J. Am. Chem. Soc.,* 1938, vol. 60, 309
- **W. HOFMANN.** Kautschuktechnologie. Genter Verlag, 1980
- **HAMBURG VON DR. W. NIEDERMEIER.** New insights into the tear mechanism. *Tire Technology,* 2003
- **H. GEISLER.** *DIK aktuell,* 1997
- **MEDALIA.** *Rubber Age,* April 1965
- **W. HOFMANN.** Rubber Technology Handbook. Hanser Verlag, 1994